# EUROPEAN PATENT SPECIFICATION

(11) **EP 2 658 421 B1**
(45) Date of publication and mention of the grant of the patent: **11.05.2016**
(21) Application number: 12797811.2
(22) Date of filing: 22.11.2012
(51) Int. Cl.: A47J 31/52, A47J 31/36

(54) **CAPSULE-CONTROLLED MOTORIZED BREWING UNIT**
KAPSELGESTEUERTE, MOTORISIERTE BRÜHEINHEIT
UNITÉ DE BRASSAGE MOTORISÉ CONTRÔLÉ PAR CAPSULE

(30) Priority: 28.02.2012 EP 12157379
(43) Date of publication of application: 06.11.2013
(73) Proprietor: Nestec S.A., 1800 Vevey (CH)
(72) Inventor: MÖRI, Peter, 3272 Walperswil (CH); BESSON, François, 2013 Colombier (CH)
(74) Representative: Schnyder, Frank Simon
(86) International application number: PCT/EP2012/073324
(87) International publication number: WO 2013/127476

(56) References cited:
- WO-A1-2012/025258
- WO-A2-2011/113854
- US-A1- 2010 288 132
- US-A1- 2011 011 271

## Description

### Field of the invention

The present invention relates to a user-convenient system relating to the cooperation of an ingredient capsule and a machine for the preparation of a beverage from the ingredient capsule. The invention also relates to the method of operating the system as well as to the use of a capsule for providing such a system or operating it.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Technical background

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use.

WO 2005/004683 and WO 2007/135136 relate to such brewing devices. The devices comprise a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle may serve to cover and uncover the passage for the capsule. The movable parts of the brewing device are actuated manually via the handle. The manual force required to move the movable parts varies during closure and opening of the machine and depends on the dimensional tolerances of the capsules used and the positioning and nature of the capsules as well as the temperature of the brewing unit.

WO 2009/043630 discloses a beverage preparation machine including a brewing unit having a front part with a passage for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing.

From a different approach, the actuation of the movable part of the brewing device may be motorized. EP 1 767 129 relates to a motor-driven extraction module for a capsule-based beverage production device. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent squeezing-injuries by stopping the motor before any finger is caught in the brewing device.

Non-prepublished WO2012/025258 discloses a machine having two brewing unit assemblies that form portions of a brewing chamber and that are relatively movable by a motor from an open position for inserting an ingredient capsule to a closed position for preparing beverages from the capsule. This machine has control means for controlling the motor based on the comparison of the evolution over time of the power consumption of the motor to a set reference. In particular, when an ingredient capsule is inserted in the machine, the current consumption can evolve over time along: an initial portion forming a sharp increase of current consumption reflecting a start of motion of the brewing unit assemblies; a second portion that starts at a level slightly below a top of the initial portion and that slowly increases due to an increasing resistance by the capsule progressively entering the brewing chamber up to a maximum where the capsule is forced out of an intermediate position in which it is supported by stop members; another portion that slightly drops from the maximum to a minimum; a further portion that increases due to a deformation and progressive piercing of the capsule by blades associated with one of the brewing unit assemblies; a yet further portion that is more or less flat during a final approach of the assemblies; and a portion which increases due to a stressing of a biasing spring for taking up a play between the assemblies in the closed position and which reaches a maximum whereby a maximum of power is consumed by the motor indicating that the motor is blocked and that the assemblies are in their closed position. Added functionalities are derived from the comparison between the actual power consumption of the motor and a set reference, in particular functionalities relating to user-safety, automatic beverage preparation and servicing.

### Summary of the invention

An object of the invention is to provide a more convenient system for handling ingredient capsules in a machine for preparation a beverage from such a capsule, in particular a simple and safe motorized handling of the closure function of the brewing unit about such a capsule. Greater convenience can thus be provided in the loading, and optionally the ejection, of the ingredient capsule whereby the user's intervention can be reduced. Another object is to provide a safe operation by reducing the risk of injuries or malfunctioning while using a motorized beverage machine. Another object is to provide added value functionalities such as semi-automatic or automatic brewing, rinsing and/or de-scaling modes. Another object is to control optimal conditions for rinsing and/or descalping the machine.

Hence, the invention relates in particular to an ingredient capsule and a beverage machine for preparing and dispensing a beverage and more particularly to a beverage machine having a motorized brewing unit, as well as to the use of such an ingredient capsule for this beverage machine. For instance, the machine is a coffee, tea, chocolate, cacao, milk or soup preparation machine. In particular, the machine is arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk power.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml or up to 300 or 400 ml, e.g. the volume for filling a cup or mug, depending on the type of beverage. Formed and dispensed beverages may be selected from ristrettos, espressos, lungos, cappuccinos, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

In particular, the invention relates to a system comprising a capsule and a beverage machine. The beverage machine has a brewing unit and activation means.

The capsule has a sidewall joined to a capsule bottom, and a capsule top. The capsule sidewall, bottom and top form a generally cup-shaped container for containing a beverage ingredient.

The brewing unit has a first assembly and a second assembly cooperating together. One of the assemblies comprises a capsule receptacle having a sidewall and a mouth, such as a generally cup-shaped capsule receptacle, delimiting with the other assembly at least part of a brewing chamber for receiving and containing the ingredient capsule.

In the context of the present invention, "assembly" may refer to a single component assembling different functions, e.g. mechanical guiding function, mechanical holding function, mechanical piercing function, flow function, pressure function, etc..., and/or refer to a plurality of components assembling the desired function(s).

The activation means include means for supplying water, in particular heated water, to the brewing chamber and means for driving at least one of the assemblies:
- away from the cooperating assembly into an open position for forming between the assemblies a passage for inserting into and/or removing from the brewing unit the ingredient capsule; and
- to the cooperating assembly into a closed position for forming said brewing chamber.

The capsule, the brewing unit and the drive means are arranged so that:
- when the assemblies are in the open position, the capsule inserted via the passage is retained between the assemblies;
- when the assemblies are driven by the drive means from the open to the closed position, the capsule bottom and at least part of the capsule sidewall enter the capsule receptacle via its mouth; and
- when the assemblies are in the closed position, the capsule is in a brewing position in the brewing chamber.

Normally, when the assemblies with a capsule thereinbetween are brought from the closed position into the open position, the capsule is evacuated from assemblies, e.g. evacuated below the assemblies under the effect of gravity.

For instance, upon insertion and before bringing the assemblies into the closed position about the capsule, the capsule can be retained in the open position by stop members of the brewing unit. In particular, the capsule top has a periphery that extends beyond the sidewall to form a flange and/or the capsule sidewall has a peripheral collar that is angled out from the mouth to form a generally equivalent flange. Such a capsule flange may be used to be guided along the insertion passage and to rest on the stop members placed at the bottom of the insertion channel. The capsule flange can then be forced below the stop members during the closure of the assemblies in view of the later evacuation by gravity of the capsule below the stop members. Such a capsule retaining system and other suitable retaining systems are for example generally disclosed in WO 2005/004683. Alternative suitable arrangements for guiding and supporting a capsule in an intermediate position inbetween open assemblies are disclosed in WO 2005/004683 as well as in WO2007/135136, WO 2007/135135 and WO 2009/043630.

In accordance with the invention, the activation means include a motor for driving the assemblies between the open and closed positions and control means for controlling the water supply means and the drive action of the motor. The control means comprise:
- means for measuring at least one electrical parameter representative of a consumption of power by the motor and for comparing to a set reference an evolution of the measured parameter over time during the transfer of the assemblies from the open to the closed position; and
- means for providing to the activation means an input resulting from the comparison of the evolution of the measured parameter to the set reference.

Moreover, the assemblies and the capsule are arranged so that, when the capsule is retained in the open position and the assemblies are then driven from the open position towards the closed position, the capsule sidewall and the mouth of the capsule receptacle are urged together and contact each other in a sliding friction relationship over a fraction of the capsule sidewall. In particular, the outer surface of capsule sidewall and the inner surface of the receptacle's mouth are urged together in this manner. Thereby, a capsule-generated resistance against closure of the assemblies is created that affects the power consumption of the motor during closure and hence the measured parameter over time. Therefrom, a corresponding input to the activation means is generated.

Cormersely, the above non-prepublished WO2012/025258 merely generally mentions that a resistance against closure of the assemblies is generated by the presence of the capsule: while the capsule progressively enters the brewing chamber; when the capsule is forced out of an intermediate position; and when the capsule is pierced. Beyond these general indications, this non-prepublished prior art does not clearly and unambiguously disclose how the resistance against closure is generated during closure of the assemblies with a capsule. In particular, as opposed to the present invention as defined in claim 1, there is no disclosure in this non-prepublished prior art of an urging together of a capsule sidewall (that extends between a capsule top and a capsule bottom) and the mouth of the capsule receptacle (e.g. as opposed to merely an inner sidewall of the capsule receptacle) so that the capsule sidewall and the receptacle's mouth contact each other in a sliding friction relationship over a fraction of the capsule sidewall (e.g. as opposed to a merely punctual contact or no contact at all between the sidewall and the receptacle's mouth). *A fortiori*, there is even less of a disclosure in the non-prepublished prior art of the relative size and position of the contact surface of the receptacle's mouth and of this fraction of the capsule sidewall that are urged together in a friction sliding relationship, as defined in claims 6 to 13. Equally undisclosed in the above non-prepublished WO2012/025258 is a comparison to a set reference of a cumulated consumption of power by the motor during the transfer from the open to the closed positions of the assemblies as defined in claim 4. Other claimed features are also not disclosed in WO2012/0252258.

This electrical parameter representative of the power consumption of the motor may be compared to the set reference during the entire transfer of the assemblies from the open to the closed position or only during one or more portions of the transfer and/or even at the end of the transfer, i.e. in particular at periods of time when events may occur that are decisive for the process of generating the input to the activation means. It may be sufficient to monitor the power consumption during the portions of the transfer during which specific variable events can be expected (e.g. presence or absence of a capsule, jamming of a capsule, presence of a human body part such as a finger...) which is pertinent to a decision-making process for determining the input to the activation means. However, it can be desirable to monitor the power consumption during the entire transfer of the assemblies, especially when decisive events, including malfunctioning or mechanical jamming cannot be completely ruled out during the entire transfer. The power consumption may also be monitored during the entire transfer when the entire power consumption of the transfer is decisive for process of generating the input to the activation means.

For instance, the corresponding input may relate to stopping or continuing or reversing the powering of the motor, or allowing the supply of water to the brewing chamber once the assemblies are closed. This allowed supply of water upon closure may be automatically initiated by the control means or initiated upon user-request via a user-interface. The water may be supplied to the chamber for preparing a beverage by mixing with the ingredient in the capsule. Of course further inputs for stopping, continuing or reversing the powering of the motor or for allowing or disallowing water supply for beverage preparation or for affecting the properties of the water supply (e.g. water flow, temperature, pressure, amount...), may be generated during the closure of the assemblies relating to the presence of a capsule, proper insertion of the capsule, type of capsule etc... as will be discussed below. Hence, several capsule-related tests, in particular successive control tests, may be carried out during the closure of the assemblies.

Features of the capsule that may be automatically tested via the control of the motor include the proper positioning of the capsule between the assemblies, the dimensions of the capsule, the resistance of the capsule against deformation, etc... It is also contemplated to identify different types of capsules via their differentiating characteristics, e.g. different capsule types exhibiting different dimensions and/or different resistances against deformation. The differentiation of suitable capsule types may be used to automatically adjust beverage preparation parameters, e.g. temperature, pressure and/or ingredient quantities for a given beverage preparation and resulting beverage serving.

In a very simple manner, it is possible to detect the presence or the absence of a capsule inbetween the assemblies during their transfer from their open to their closed position by comparing the total or cumulated power consumption during the transfer to a set reference. When the power consumption is higher than the set reference it can mean that the motor had to overcome the abovementioned sliding friction relationship between the capsule sidewall and the mouth of the receptacle, and thus that a capsule is present between the assemblies. When the cumulated power consumption is below this set reference, it means that the motor did not have to overcome this sliding friction relationship between the capsule sidewall and the mouth of the receptacle (and, when correspondingly arranged, other capsule-generated resistance such as capsule piercing), and thus that no capsule is present between the assemblies.

When the ingredient capsule is properly inserted into the machine, the assemblies will experience a certain force against closure influenced by the expected resistance against closure generated by the capsule whose sidewall slides against the mouth of the receptacle. In this case, water can be circulated under beverage preparation conditions into the capsule to form a beverage. When no ingredient capsule is inserted into the machine, the assemblies will experience a different (usually lower) force against closure influenced by the absence of capsule-generated resistance against closure. In this case, either no water is circulated or water for servicing, e.g. at specific service conditions regarding the water volume, pressure, flow and/or temperature, may be circulated into the brewing unit.

When the ingredient capsule is improperly inserted into the machine, e.g. when the capsule is misplaced or when the capsule is so damaged or otherwise altered that its characteristics do not correspond to an expected capsule generated-force, a different closure force will be experienced. Capsule misplacing may be caused by improper introduction of a new capsule into the machine or it may be caused by the presence of an improperly evacuated previously used capsule that remains in the way between the assemblies. Improper capsule evacuation may be experienced with a full used-capsule collector to which the capsules are evacuated upon use; when the collector is full the capsule evacuation from between the assemblies is jeopardized until the collector is emptied. This problem and examples of improved used-capsules collectors are for instance discussed in WO 2009/135869, WO 2009/074559, WO 2011/086087 and WO 2011/086088. In this case, water should not be circulated into the capsule to prepare a beverage. For example when an improper capsule insertion is detected, the assemblies are re-opened without beverage formation either immediately upon detection of the improper insertion or at the end of closure or upon user-intervention.

Hence, the circumstances under which the assemblies are moved to the open and/or closed position in connection with a capsule between the assemblies, or even without such a capsule, can be monitored by monitoring the power consumption of the motor. In particular, the required mechanical output energy of the motor to produce a movement is directly linked to its consumed input energy, e.g. electric energy, can be measured.

The set reference may be based on a power consumption modelisation and/or an empiric power consumption measure under predetermined conditions, e.g. with or without ingredient capsule in the brewing unit, specific environment of use, etc... The set reference typically includes a tolerance margin to take into account expected variations that may occur e.g. due to the environment of use and/or manufacturing tolerances and/or handling tolerances and in particular to the friction coefficients between the capsules and the assemblies during closure.

For example, the motor is controlled to produce a motor output movement, e.g. rotation of a rotor, at a predetermined speed and/or to operate at a predetermined input voltage, e.g. at one or more constant voltage levels. To maintain the predetermined speed and/or voltage, the input powering of the motor can be adjusted in line with the needed output powering, e.g. angular speed and torque (depending on the constraints under which the motor has to operate in a given circumstance). In particular, the power supply of the motor may be arranged to control the motor's input voltage and the motor can be arranged to draw the required amount of current needed to maintain the input voltage. By measuring the required motor input powering to maintain the desired motor output speed and/or the input voltage, the mechanical constraints exercised against the motor output can be determined. Such constraints may correspond to normal operation of the motorized machine, e.g. opening or closing the brewing unit assemblies with or without a capsule ingredient, or to an abnormal operation, e.g. an interference with an obstacle preventing normal opening or closing, such as a misplaced capsule or a human body part e.g. a finger, caught inbetween the assemblies or inhibiting reopening of the assemblies, e.g. jamming of the brewing unit. In the former case (normal operation), the motorized beverage machine may be configured to allow a corresponding operation, e.g. continue closure of the assemblies, allow beverage preparation or cleaning, or even to carry it out automatically at closure. In the latter case (abnormal operation), a safety mode may be provided, e.g. to stop closure or reopen the assemblies when an undesired obstacle is caught between the assemblies, or stop the motor when the brewing unit is jammed e.g. to prevent undesired stress in the machine and allow for example manual unjamming by a user and/or service person, as appropriate.

At least one of the electrical parameter(s) and at least one of the set reference(s) can be continuously or intermittently compared, in particular periodically compared, during the transfer of the assemblies from the open to the closed positions, in particular to detect a blocking obstacle inbetween the assemblies during the transfer. Optionally, the electrical parameter(s) and the set reference (s) (42) are compared at a frequency in the range of 3 to 1000 s⁻¹, in particular 5 to 300 s⁻¹, such as 10 to 100 s⁻¹. Intermittent comparison, e.g. periodic comparison, can be carried out digitally, by a digital control system (e.g. digital hardware gates and/or programmable digital processors). Continuous comparison may be carried out analogically by a corresponding electric control circuit.

As discussed above, at least one electrical parameter and at least one set reference are compared once the assemblies have been transferred from the open to the closed positions, in particular to detect a presence or absence of the capsule in-between the assemblies. The electrical parameter(s) and the set reference(s) may be representative of a cumulated consumption of power by the motor during the transfer from the open to the closed positions of the assemblies, e.g. the parameter is representative of the total energy consumed by the motor during the transfer from the open to the closed positions. Such parameter may be used to determine whether or not a capsule is present in the assembly. As discussed above, when a capsule is present between the assemblies it creates an additional resistance against closure that needs to be overcome by the motor as compared to the resistance the motor has to overcome when there is no capsule between the assemblies. By providing an appropriate set reference representing a level of cumulated power between the cumulated power needed for closing the assemblies with a capsule and a level without a capsule, the comparison of the measured parameter to the set reference may be used to distinguish the presence from the absence of a capsule between the assemblies at the end of the transfer from the open to the closed positions.

When no capsule is detected in-between the closed assemblies, the machine may enter a rinsing or descaling mode. When a capsule is detected in-between the closed assemblies, the machine may enter a beverage preparation module.

Typically, the sidewall of the capsule has a centrally-extending capsule axis generally perpendicular to the capsule top or capsule bottom. Likewise, the mouth of the capsule receptacle may have a central receptacle axis perpendicular to the mouth. The central capsule axis may be an axis of symmetry of the capsule sidewall. The central receptacle axis may be an axis of symmetry of the receptacle mouth or receptacle sidewall.

The central capsule axis and the central receptacle axis can be at an angle when the assemblies are in the open position and the capsule is retained therebetween. The two axis can be brought together, in particular until general superposition of the axis, during closure of the assemblies.

The capsule can be moved from a first position, e.g. the retained position of the capsule between the open assemblies, to a second position, e.g. a brewing or extraction position, between the assemblies under the effect of the closure of the assemblies and the forces generated by the closure of the assemblies onto the capsule. The first and second positions may be different or the same, depending on the relative motion of the assemblies for closure about the capsule.

For instance, between the assemblies in the open position, the capsule top is held by a capsule holder whereas the capsule bottom, or a predominant part of the capsule bottom, is unsupported whereby the capsule is allowed to be downwardly inclined towards the capsule bottom under the effect of gravity. The receptacle with the mouth can be moved horizontally so that the upper part of the mouth pushes onto the upwardly oriented part of the capsule sidewall to force the capsule down. Similarly, the capsule may be slightly off-set relative to the receptacle's mouth.

The principle of moving a capsule from a first (or intermediate) position between open assemblies and a second (or extraction) position between the closed assemblies is generally disclosed by way of example in WO 2005/004683.

In an embodiment, the capsule and machine system can be so configured that, when the assemblies are driven towards the closed position with a capsule thereinbetween and until the central capsule axis and the central receptacle axis are brought generally in superposition, the capsule sidewall and the mouth of the capsule receptacle can be urged together and contact each other in a sliding friction relationship over a fraction of the capsule sidewall at a distance from the capsule bottom. Such a distance from the capsule bottom may correspond to at least 2%, in particular in the range of 5 to 50 such as 7 to 45%, of the length of the sidewall extending from the capsule bottom to the capsule top.

In an embodiment, the capsule and machine System can be so configured that, when the assemblies are driven towards the closed position with a capsule thereinbetween and until the central capsule axis and the central receptacle axis are brought generally in superposition, the capsule sidewall and the mouth of the capsule receptacle are urged together and contact each other in a sliding friction relationship over a fraction of the capsule sidewall at a distance from the capsule top. Such distance from the capsule top can correspond to at least 10%, in particular in the range of 15 to 35%, of the length of the sidewall extending from the capsule bottom to the capsule top.

In an embodiment, the capsule and machine system can be so configured that, when the assemblies are driven towards the closed position with a capsule thereinbetween, the fraction of the capsule sidewall in sliding friction relationship with the receptacle's mouth extends over a distance that corresponds to at least 20%, in particular in the range of 30 to 85% such as 45 to 80%, of the length of the sidewall extending from the capsule bottom to the capsule top.

In general, the sidewall may have an external surface formed by a straight or slightly curved or arched line, i.e. a generator line (or generatrix), that moves along and between the peripheries of the capsule top and capsule bottom, to form a generally cylindrical or frusto-conical surface. Of course, the capsule and/or receptacle sidewalls do(es) not necessarily have a circular basis. The basis may be generally elliptic or polygonal. This leads to generally pyramidal or cylindrical sidewalls.

When the set reference(s) allow a sufficient margin of tolerance, the particular shape of the capsule, including of the sidewall, is not decisive for detecting the presence or the absence of a capsule inbetween the assemblies. Moreover, when the presence or absence of capsule inbetween the assemblies is detected from the cumulated power consumption of the motor during the transfer, an infinity of capsule shapes may result in an identical cumulated power consumption.

Therefore, the present invention may be implemented in a manner that allows a variety of different capsule shapes without discrimination between the shapes. Alternatively, the present invention may be implemented in a manner that allows an identification of different capsule shapes with more or less tolerances on the particular dimension of the shapes.

Moreover, the invention may also be implemented in a way that the power monitoring is affected simultaneously by the shape of the capsule its resistance against deformation and/or its friction coefficient. Therefore, different capsule shapes may result in the same power detection, when the divergences of the corresponding capsule shapes are compensated by the resistance against deformation and/or the friction coefficient.

Likewise, capsules of the same shape may be distinguished from their resistance against deformation, i.e. material making the capsule and/or thickness of the capsule walls, and/or from their friction coefficient.

The sliding friction relationship between the receptacle's mouth and the capsule sidewall may extend along a fraction of a generator line of the capsule sidewall, in particular an upwardly-situated generator line of the sidewall when entering the mouth.

The capsule sidewall and the mouth of the capsule receptacle may be urged together and contact each other in a sliding friction relationship over a top spot of the mouth.

For instance, when the assemblies are driven towards the closed position with a capsule thereinbetween and
- before the central capsule axis and the central receptacle axis are brought generally in superposition, the capsule sidewall and the mouth of the capsule receptacle are urged together and contact each other in a sliding friction relationship over an upwardly-oriented fraction of the capsule sidewall and a top spot of the mouth, and
- once the central capsule axis and the central receptacle axis are generally in superposition, the capsule sidewall and the mouth of the capsule receptacle are urged together and contact each other in a sliding friction relationship over a downwardly-oriented fraction of the capsule sidewall and a bottom spot of the mouth, the downwardly oriented contacting capsule fraction may be in the shape of a more or less large line.

Usually, at least one of the assemblies has piercing means, such as blades, for piercing the capsule.

The piercing means can be forced into the capsule by piercing thereof when the assemblies are driven towards the closed position with a capsule thereinbetween, whereby a capsule-generated resistance against closure of the assemblies is created. This resistance may affect the power consumption of the motor during closure and the measured parameter over time so as to generate a corresponding input to the activation means, e.g. as discussed above. The piercing means can be forced into the capsule upon completion of the sliding friction relationship over the abovementioned fraction of the capsule sidewall.

Furthermore, the capsule receptacle of one assembly can have one or more friction holding members for unsticking and separating the capsule from the cooperating assembly upon reopening of the assemblies. When the assemblies are driven towards the closed position with a capsule, the friction holding member(s) may be forced against the capsule to slightly grip the capsule. Thereby, a capsule-generated resistance against closure of the assemblies can be created. This resistance may affect the power consumption of the motor during closure and the measured parameter over time so as to generate a corresponding input to the activation means, e.g. relating to the water supply as discussed above. The friction ejection member(s) may be forced against the capsule upon completion of the sliding friction relationship over the abovementioned fraction of the capsule sidewall.

Hence, in addition to checking the friction relationship between the capsule sidewall and the mouth of the receptacle, proper piercing and/or gripping of the capsule may also be checked during closure of the assemblies and before allowing water to the brewing chamber. In other words, the motor may be stopped or reversed or the water supply may be disallowed when an unexpected closure force is detected instead of a force resulting, inter-alia, from:
- an expected friction-generated force between the capsule sidewall and receptacle's mouth; and/or
- an expected piercing force; and/or
- an expected friction-generated force between the capsule and friction holding member(s).

The assemblies and the capsule can be arranged so that, when the assemblies are in the open position with a misinserted capsule and the assemblies are then driven from the open position to the closed position, a capsule-generated resistance against closure of the assemblies, in particular preventing the closure of the assemblies, is created. This resistance may affect the power consumption of the motor during closure and the abovementioned measured parameter over time to provide a safety input to the motor of the activation means, in particular an input for stopping the motor or inverting the motor to move the assemblies back to the open position.

Topically, a safety input is provided to the motor when detecting an abnormal variation of the measured parameter relative to the set reference. The variation may be deemed abnormal when the measured parameter:
- exceeds a level that is at least 20% above the set reference, in particular 30 or 40% thereabove such as 50% thereabove; and/or
- corresponds to a resistance against closure caused by the presence of an obstacle, in particular a misinserted capsule or a human body part such as a finder, inbetween the assemblies moving towards the closed position and prior to reaching thereof, for example a resistance between the assemblies of the brewing unit in the range from 50 to 200 N, in particular from 75, 100 or 120 to 130 or 150 N.

Providing a reference set that includes a tolerance range, e.g. 20, 30, 40 or even 50% relative to a median or average reference set may be appropriate to take into account normal variations of mechanical effects occurring in the machine, such as variations of a friction coefficient, temperature and humidity as well as manufacturing tolerances and tolerances on the friction coefficient of the capsules and brewing unit assemblies.

The safety input may comprise inverting the motor action to move the movable assembly in open position or reducing or stopping the drive action of the motor.

A set reference may be a maximum power consumption that is allowed for the motor during the transfer of the assemblies. When the motor requires power that exceeds this maximum to proceed further, it may mean that an undesired obstacle interferes with the movement of the assemblies or that the assemblies have reached their closed positions. For instance, when the exceeding power is required before a predetermined safety period has lapsed from the beginning of the powering of the motor for a given transfer of the assemblies, the assemblies may be exposed to an undesired obstacle during their transfer and a corresponding input to the activation means may be generated, such as stopping or inverting the motor. When the exceeding power is required after this predetermined safety period has lapsed from the beginning of the powering of the motor for a given transfer of the assemblies, the assemblies are likely to have reached their closed position and a corresponding input to the activation means may be generated, such as allowing or the circulation of water for a beverage preparation or for a rinsing, cleaning or descaling process. The circulation of water may be automatic upon closure of the assemblies or merely authorized in view of a subsequent corresponding user-request.

The control means can be configured to detect the abnormal variation in comparison to a referential curve representing the normal evolution of the electrical parameter as a function of time corresponding to:
- a mode in which the movable assembly is moved into a closed position with an ingredient capsule inserted in the brewing chamber (hereinafter the "Capsule closure mode"); and/or
- a mode in which the movable assembly is moved into a closed position with no capsule inserted in the brewing chamber (hereinafter the "Empty closure modes").

A water supply mode for the supply of heated water to the brewing chamber may be initiated when no abnormal variation of the measured parameter relative to the set reference has been detected and the assembly is in a closed position "Capsule closure mode or empty closure mode"). The supplying of heated water may involve the circulation, e.g. by using a pump, of water from a source, e.g. a water tank, and/or the heating of water, e.g. continuous or batch heating, to the brewing chamber. The supply of heated water may be controlled, e.g. via one or more temperature sensors, pressure sensors and/or flowmeters, to adjust the heating and flow characteristics of the supplied heated water. In the "capsule closure mode" the temperature of the circulated water can be adjusted to a particular beverage preparation process. In the "empty closure mode" the temperature of the circulated water may be adjusted to a cleaning and/or rinsing process.

Optionally, the control means comprise a user-interface to selectively initiate the water supply mode. Hence, water may be circulated to the brewing chamber automatically or upon a user-request via the user-interface.

However, the water supply may be automatically prevented when a capsule is misinserted into the machine, e.g. misplaced or severely altered in its characteristics, for instance the capsule shape or outer properties, necessary for proper handling of the capsule.

The control means may be configured to initiate a brewing mode when the measured parameter matches the referential curve (including a possible tolerance) corresponding to the "capsule closure mode".

The control means can be configured to initiate a rinsing and/or de-scaling mode when the measured parameter matches the referential curve corresponding to the "empty closure mode". In particular, the control means can be configured so that this supplied water is heated at a temperature, such as in the range of 55 to 85°C, lower than the normal brewing temperature, such as in the range of 85 to 98°C.

When the measured parameter corresponds neither to an "empty closure mode" nor to a "capsule closure mode", the control means can be configured to initiate a malfunction mode, e.g. generating at least one input for stopping or reversing the motor, shutting down the machine or parts thereof, indicate malfunction to the user via a user-interface such as a visual and/or audio interface.

At least one measured parameter may represent the current consumption of the motor.

The transmission means may include a gear assembly.

The transmission means, in particular a gear assembly, may be configured to provide a transmission ratio of at least 1:100, preferably comprised between 1:200 and 1:300.

The control means can be free of end position sensors in the open position and/or in the closed position. In this case, the measure of the power consumption by the motor may be used to determine the open position and/or closed position. The measure of the power consumption may be correlated with a time evolution to link the consumption to a time-based expected position of the movable assembly, for instance to distinguish the power consumption resulting from reaching an end position from the power consumption resulting from interference with an intermediate undesired obstacle.

Alternatively, the control means may include at least one end position sensor, e.g. two end position sensors in particular for detecting the open position and/or the closed position.

The control means can be configured to detect any abnormal variation in comparison to a referential curve representing the normal evolution of the electrical parameter as a function of time and to:
- initiate a water supply mode when no abnormal variation of the measured parameter relative to the set reference has been detected and the assembly is in a closed position; and/or
- provide a safety input to the motor when an abnormal variation of the measured parameter relative to the set reference is detected.

As previously mentioned, the invention also relates to a method of operating the system as described above, as well as to the use, for providing such a system or for carrying out the method, of a capsule sidewall of an ingredient capsule as a resistance-generator affecting an input of the activation means. For example, such a capsule may contain at least one of coffee, tea, chocolate, milk and soup constituents as an ingredient.

### Brief description of the drawings

The invention will now be described with reference to the schematic drawings, wherein:
- Figure 1 is a partly schematic and partly perspective view of a beverage preparation system according to the invention;
- Figure 2 shows a partial cross-sectional perspective representation of the brewing unit of the system of Figure 1 in an open position;
- Figure 3 shows a partial cross-sectional perspective representation of the brewing unit of the system of Figure 1 in a closed position;
- Figure 4 shows a partial cross-sectional perspective representation of the capsule and the brewing unit of the system of Figure 1 and in a closed position; and
- Figures 5 and 5a show the current consumption of the system's motor as a function of time in a "capsule closure mode" and in an "empty closure made";
- Figures 6 to 11 show, in cross-section, part of a beverage preparation system in accordance with the invention with a brewing unit and a capsule in different positions; and
- Figure 12 illustrates a capsule of the beverage preparation system according to the invention.

### Detailed description of the invention

An example of a capsule 30, a motorized beverage machine 1 and their interaction according to the invention is illustrated in the appended Figures.

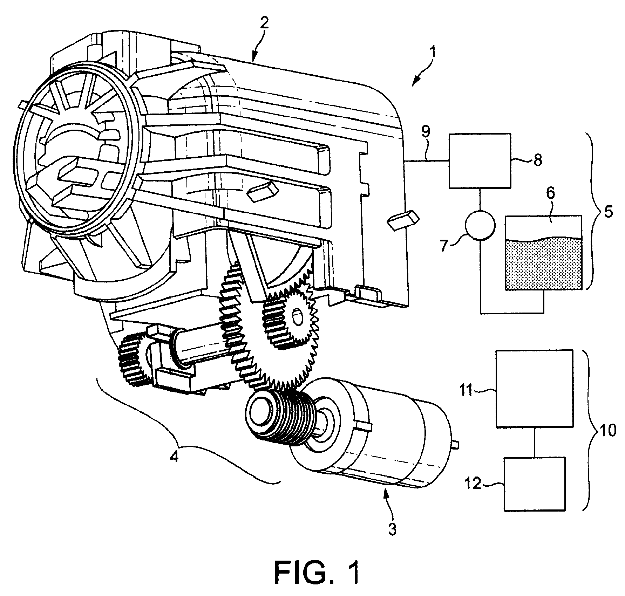

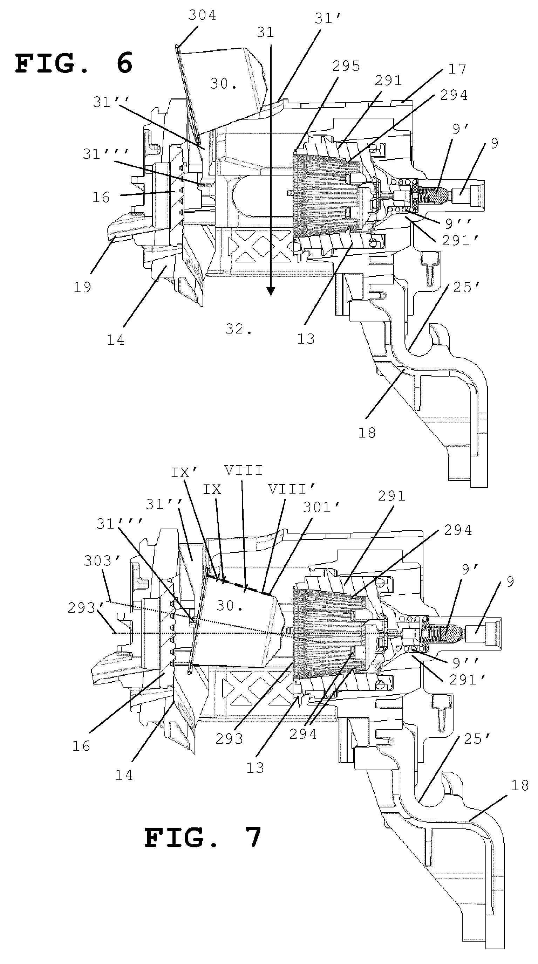

As illustrated in Fig. 1, machine 1 comprises a brewing unit 2 which is connected to an electric motor 3 that drives transmission means 4 for moving brewing unit 2 from an open position to a closed position and/or vice versa. Water supply means 5 are also provided as a part of machine 1. Such means 5 may include a water reservoir 6, a water pump 7 and a water heater 8. Water circulates in a water circuit 9 which is linked to brewing unit 2. Typically, circuit 9 is in fluid connection with brewing unit 2, e.g. via a brewing unit check valve 9' and capsule piercer 15 (see Figs 6 to 11). Control means 10 are also provided in machine 1. Control means 10 may include a control unit 11, sensors (not represented) and optionally a user interface 12. Control unit 11 may include processor(s), memories and programs to provide appropriate inputs to and receive outputs from the different activation means of the machine, in particular, the pump, heater and motor.

Control unit 11 may be connected, e.g. wired or wireless, to user interface 12, pump 7, heater 8 and various sensors, such as flow-meters, temperature sensors, pressure sensors, ammeter (e.g. for measuring the current consumption of motor 3) such as a Hall sensor. In particular, control unit 11 may control electric power switches and/or current and voltage regulators associated with motor 3, pump 7 and heater 8.

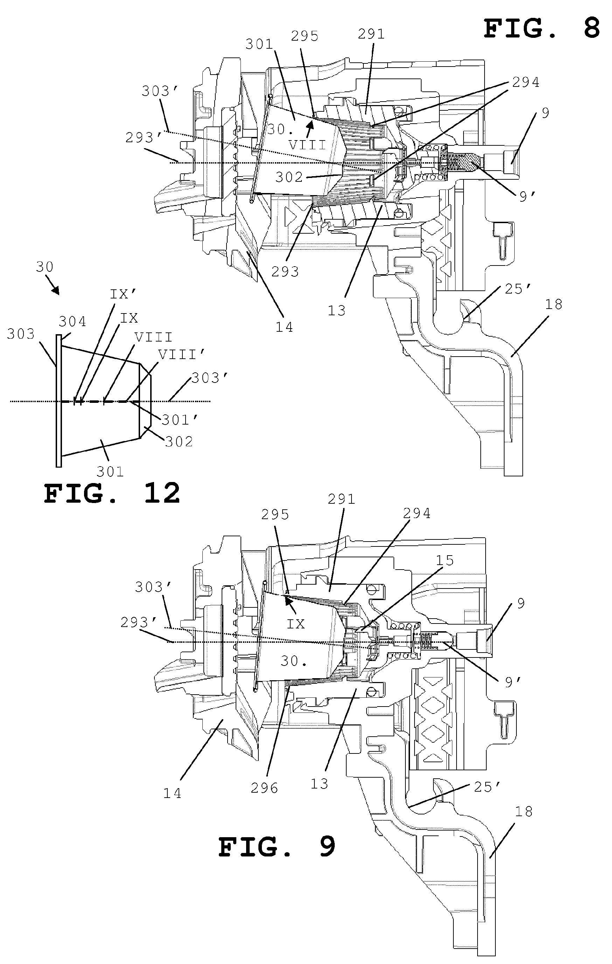

Fig. 12 shows in detail an example of a capsule 30 according to the invention. Capsule 30 has a sidewall 301 joined to a capsule bottom 302, and a capsule top 303. Sidewall 301, bottom 302 and top 303 form a generally cup-shaped container for containing a beverage ingredient. Sidewall 301 is generally frusto-conically shaped. Capsule bottom 302 is slightly domed. Capsule top 303 forms a lid having a periphery extending beyond sidewall 301, thereby forming a laterally protruding peripheral flange or rim 304.

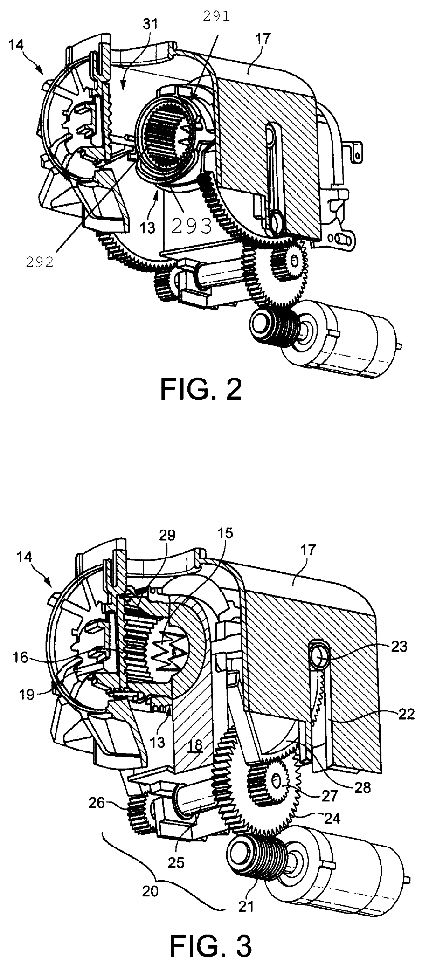

As shown in Figures 2 and 3, brewing unit 2 has a first assembly 13 and a second assembly 14 which are movable relatively one another. One of assemblies 13,14 comprises a generally cup-shaped capsule receptacle 291, e.g. a capsule cage, having a sidewall 292 and a mouth 293 and delimiting with the other assembly 14 at least part of a brewing chamber 29 for containing capsule 30.

For instance, first assembly 13 is a rear injection assembly 13 and includes capsule receptacle 291 with injection blades 15 at its bottom. Front assembly 14 forms a beverage delivery assembly and includes a capsule delivery plate 16. Front assembly 14 is associated to an outer casing 17 and is movable therewith relatively to rear injection assembly 13 which remains fixed to a frame 18 of machine 1. Front delivery assembly 14 includes a beverage outlet 19.

Front delivery assembly 14 is moved relatively to rear injection assembly 13 by means of motor 3 via transmission means 4.

In particular, the activation means are configured to supply water, in particular heated water, to brewing chamber 29 and to drive at least one assembly 14 of assemblies 13,14:
- away from cooperating assembly 13 into an open position for forming between assemblies 13,14 a passage 31 for inserting into and/or removing from brewing unit 2 ingredient capsule 30; and
- to cooperating assembly 13 into a closed position for forming brewing chamber 29.

Hence, in the open position (Figs 2, 6 and 7), passage 31 is provided between first and second assemblies 13,14 for allowing the insertion of capsule 30. For example, in passage 31, capsule rim or flange 304 may be guided downwards in lateral channels 31". Between assemblies 13,14, capsule 30 may be positioned in a first or intermediate position (Fig. 7) e.g. on a corresponding stop means 31"', for example as described in EP 1 646 305 or WO 2009/043630.

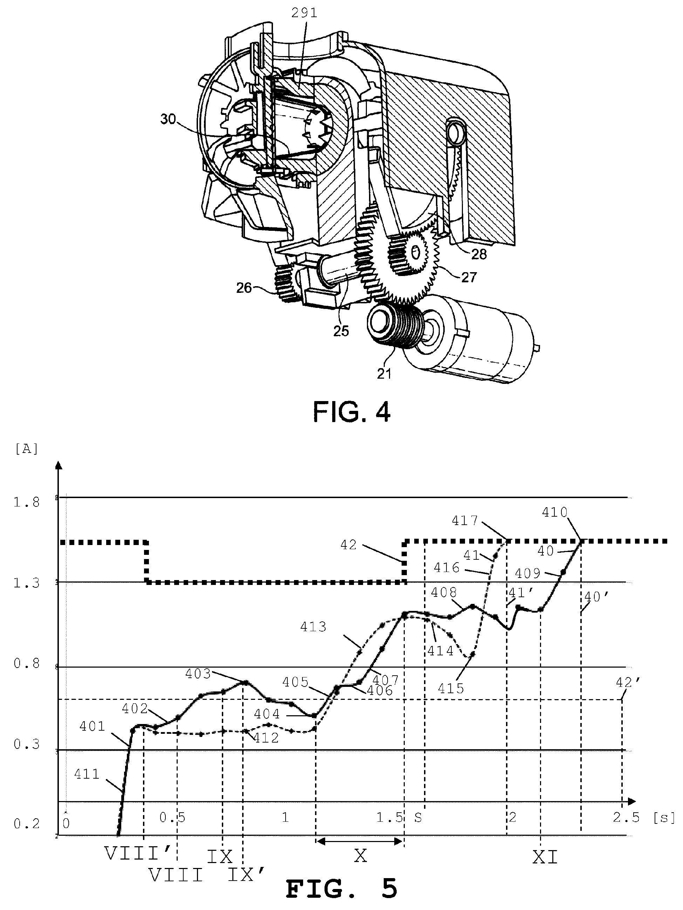

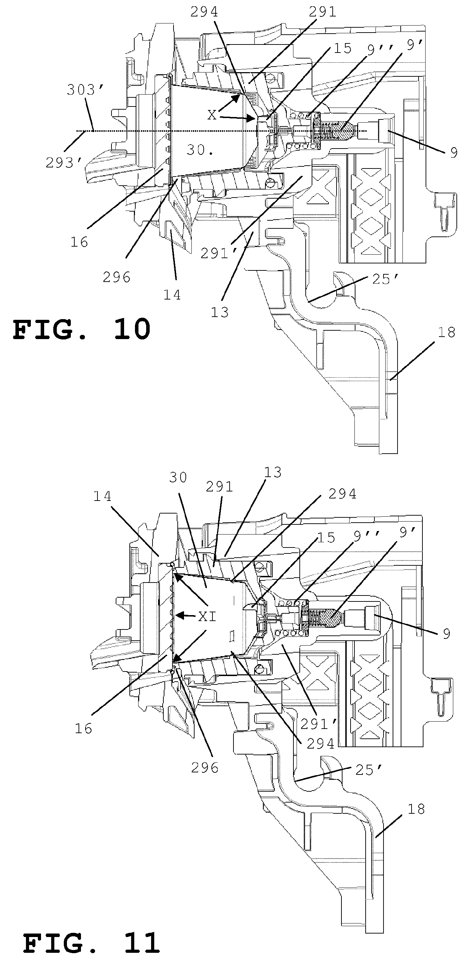

In the closed position (Figs 3, 4 and 11), a brewing chamber 29 is formed. Brewing chamber 29 is occupied at least partly by a capsule 30 in a normally closed position of brewing unit 2 (Figures 4 and 11), when assemblies 13,14 are in the closed position. In this configuration, capsule 30 can be in a second or extraction position, in particular a position closer to assembly 14 or plate 16 than in the first position. Capsule 30 should be compatible with brewing chamber 29 and passage 31 for being handled properly by assemblies 13,14 during closure and opening of assemblies 13,14 of brewing unit 2.

Suitable examples of capsules and brewing chambers are for instance generally disclosed in EP 0 512 468, EP 0 512 470 and EP 2 068 684.

Transmission means 4 may include various mechanical systems. Transmission means 4 may have a force transmission ratio from the motor to the assembly of at least 1:50, in particular from 1:100 to 1:300 to 1:500.

In the embodiment illustrated in Figs 1 to 4, transmission means 4 includes a gear assembly 20 linked to a cam 22 and cam-follower 23. For a balanced transmission of the forces on casing 17, cam 22 comprises a pair of elongated grooves located on each side of casing 17. Gear assembly 20 comprises a worm drive 21 connected to the motor axle (i.e. to the rotor of motor 3). Worm drive 21 operates a large gear 24, e.g. a spur gear or helical gear, which is fixed to an axle 25 on which sit two lateral smaller gears 26, 27, e.g. spur gears or helical gears or friction gears. The smaller gears 26, 27 drives a pair of gear segments 28, e.g. spur gears or helical gears or friction gears, which moves cam-follower 23 and, by way of consequence, move cam 22 with the casing 17 from the opened to the closed position and vice versa. In the closed position gear segments 28 with cam-followers 23 are positioned such that the brewing pressure is absorbed across the gear segments without it being transmitted to the rest of the drive system, e.g. radially across the gear segments. However, as explained hereafter, the brewing pressure can be absorbed by the drive system by a suitable configuration.

For instance, motor 3 and at least part of transmission means 4 are assembled directly or indirectly on one of assemblies 13,14. In particular motor 3 may be mounted on a frame 18 that can be fixed to assembly 13 and axle 25 may be mounted on a corresponding part 25' of frame 18.

The gear ratio between worm drive 21 and large gear 24 may be in the range of 1:25 to 1:100, such as 1:50 to 1:80. The gear ratio between small gear 27 and gear segment 28 can be in the range of 1:3 to 1:10, in particular in the range of 1:5 to 1:8.

For instance, the use of a worm drive 21 in transmission 4 can make this transmission unidirectional. In other words, force and movement can only be transmitted from motor 3 to transmission 4 and not vice versa, worm drive 21 acting as a stop in the opposite direction. Hence, no further stop means is needed to maintain assemblies 13,14 in a given position. It is sufficient to interrupt the powering of motor 3 to secure assemblies 13,14 in a given position, in particular in the closed or open position.

In a possible solution, both open and closed end positions are geometrically made as "hard stops" with no end switches or sensors.

The input for the motor control may involve the user-interface, the current absorption of the motor and a timer of the control unit.

Capsule 30, brewing unit 2 and drive means 3,4 are arranged so that:
- when the assemblies 13,14 are in the open position, capsule 30 inserted via passage 31 is retained between assemblies 13,14 (Figs 6 and 7);
- when assemblies 13,14 are driven by the drive means from the open to the closed position, capsule bottom 302 and at least part of the capsule sidewall 301 enter capsule receptacle 291 via its mouth 293 (Figs 8 to 10); and
- when assemblies 13,14 are in the closed position, capsule 30 is in a brewing position in brewing chamber 29 (Fig. 11).

Normally, when assemblies 13,14 with capsule 30 thereinbetween are brought from the closed position into the open position, capsule 30 is evacuated from between assemblies 13,14, e.g. evacuated below assemblies 13,14 under the effect of gravity, to a collection area 32 (indicated in Fig. 6).

The activation means include motor 3 for driving assemblies 13,14 between the open and closed positions and control means 10 for controlling the drive action of motor 3, control means 10 comprising:
- measuring and comparing means for measuring at least one electrical parameter 40,40',40a,41,41',41a representative of a consumption of power by motor 3 and for comparing to a set reference 42,42' an evolution of the measured parameter as a function of time during the transfer of assembly 13,14 from the open to the closed position; and
- means for providing to the activation means an input resulting from the comparison of the evolution of measured parameter 40,40',40a,41,41',41a to set reference 42,42'.

The invention will now be described with particular reference to the insertion of capsule 30 from outside machine 1 into the brewing or extraction position.

Figs 6 to 11 illustrate such an insertion sequence. In particular, Fig. 6 illustrates the insertion of capsule 30 into opening or mouth 31' of passage 31 between assemblies 13,14 in the open position. Fig. 7 illustrates capsule 30 in an intermediate position between assemblies 13,14 still in the open position, capsule flange 304 being for instance held by lateral stop members 31"' in passage 31. Figs 8 to 10 illustrate how capsule bottom 302 and a sidewall 301 progressively enter receptacle 291 of assembly 13 via receptacle opening 293. Fig. 11 shows capsule 30 in the brewing or extraction position between assemblies 13,14 in their closed position.

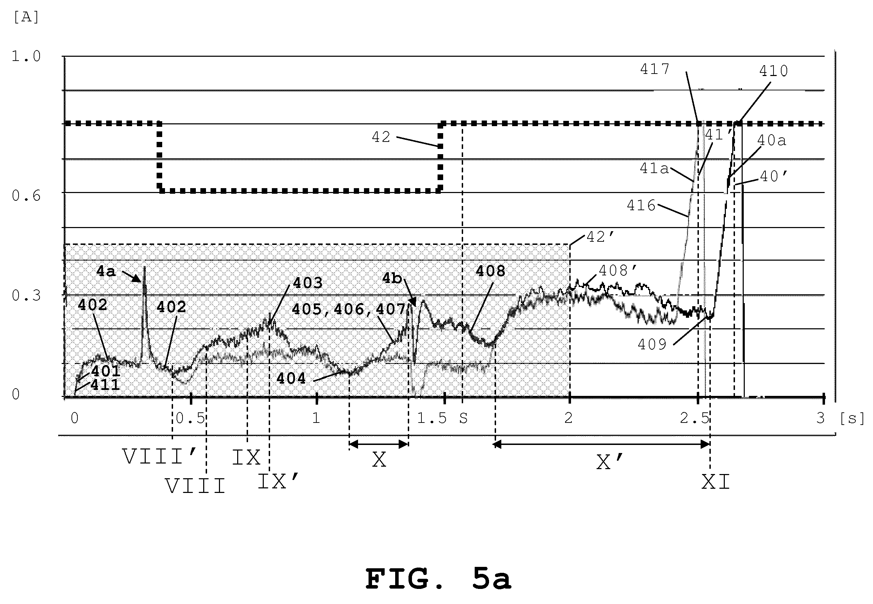

As will be explained in relation with Figures 5 to 12, assemblies 13,14 and capsule 30 are arranged so that, when capsule 30 is retained in the open position and assemblies 13,14 are then driven from the open position towards the closed position, capsule sidewall 301 and mouth 293 of capsule receptacle 291 are urged together and contact each other in a sliding friction relationship over a fraction VIII'-IX' of capsule sidewall 301 so as to create a capsule-generated resistance against the closure of assemblies 13,14, which resistance affects the power consumption of motor 3 during closure and the measured parameter over time to generate a corresponding input to the activation means, e.g. relating to supply of water to the brewing chamber as discussed above.

Fig. 12 shows on capsule 30 the location of fraction VIII'-IX'. Further illustrated in Fig. 12 are the intermediate contact positions VIII and IX of the sliding friction relationship between sidewall 301 and mouth 293 which correspond to the configurations of the system shown in Figs 8 and 9. Positions VIII, VIII', IX and XI' are also indicated in Figs 5 and 5a.

As illustrated in Figures 5 and 5a, two different typical curves 40,40a,41,41a representative of the power consumption by motor 3 can be detected and analyzed over time, e.g. by measuring the current consumption of motor 3, in particular when motor 3 is a DC motor, e.g. operated at generally constant voltage.

Curves 40,40a,41,41a are representative of the power consumption of motor 3 evolving over time during the transfer of assemblies 13,14 from the open to the closed positions.

The area underneath each curve 40,40a,41,41a delimited on the right by corresponding dashed line 40',41' represents the cumulated power consumption revolving over time of motor 3 during the transfer between the open and the closed positions. Normally, such a cumulated power consumption is representative of the total energy needed by motor 3 for the transfer from the open to the closed positions. These areas 40,40';41,41';40a,40'; 41a,41a' delimited by curves 40,40a,41,41a and lines 40',41' can be measured and cumulated over time during the transfer between the open and closed positions. These areas can then be compared to area 42' which forms a set reference.

For instance, if curves 40,40a,41,41a represent an evolution of the current consumption by motor 3, the corresponding areas 40,40';41,41';40a,40';41a,41a' may represent the energy consumed by motor 3 for the transfer from the open to the closed positions.

Reference 42' may serve to delimit the energy consumption by motor 3 for transferring assemblies 13,14 from the open to the closed positions when capsule 30 is present inbetween assemblies 13,14 (which normally requires more energy for closure) or absent (which normally requires less energy for closure).

Figs 5 and 5a illustrate measured current consumption curves 40,40a,41,41a of motor 3 during the closure of assemblies 13,14. Curves 40,40a,41,41a can be compared to a set reference, such as curve 42.

Motor 3 can be operated at one or more generally constant voltage levels.

For example, motor 3 can be operated at a constant voltage, e.g. a voltage at a level in the range of 8 of 30 volts, during the entire travelling of assemblies 13,14 between the open and closed positions, as illustrated in Fig. 5. In a second mode, exemplified in Fig. 5a, motor 3 can be operated at a plurality of voltages between the open and closed positions of assemblies 13,14.

As illustrated in Fig. 5a, the voltage at which motor 3 is operated is variable during the closure. At the beginning and towards the end of the relative movement of assemblies 13,14 (i.e. close to the fully opened and the fully closed positions), motor 3 can be powered to move at a reduced speed. Inbetween these reduced speed periods, e.g. inbetween the start and end portions of the relative movement of assemblies 13,14, motor 3 can be powered to move at a higher speed to reduce the overall time needed for opening and closing the assemblies 13,14. For instance, when motor 3 is a DC motor, it is powered at a lower voltage at the beginning and towards the end of the powering and at a higher voltage thereinbetween. As illustrated in Fig. 5a, the voltage is switched from a lower level to a higher level at point 4a and then from the higher level to the lower level at point 4b. The voltage switch may result in a current consumption peak (consumption increase or decrease). For instance, the lower voltage is in the range of 20 to 80% of the higher voltage, in particular 30 to 70% or 40 to 60%. For example, the lower voltage is of about 50% or 66% of the higher voltage. For instance, the higher voltage is in the range of 8 to 50 volts, such as 10 to 30 volts. For example, the higher voltage is at 12 volts and the lower voltage at 6 volts, or the higher voltage is at 18 volts and the lower voltage is at 12 volts.

Curves 40,40a represent the evolution over time of the current consumption of motor 3 in the "capsule closure mode". The different positions of capsule 30 and assemblies 13,14 in correspondence with curves 40,40a are shown in Figs 6 to 11. The closed state of brewing unit 2 in the capsule closure mode is represented in Figures 4 and 11 with capsule 30 enclosed in the closed brewing chamber.

Curves 41,41a represent the evolution of the current consumption of motor 3 in the "empty closure mode". The closed state of brewing unit 2 in the empty closure mode is represented in Figure 3.

The "empty closure mode" may be distinguished from the "capsule closure mode" from the profile of curves 40,40a,41,41a and/or, as discussed above, from the size of the areas underneath these curves.

Hence, curves 40,40a,41,41a reflect the power consumption of motor 3 during a closure movement of assemblies 13,14 of brewing unit 2. Likewise, corresponding power consumption curves can be determined for the opening movements, e.g. with and without capsule 30 inbetween assemblies 13,14. Such opening curves can be used as a reference set to detect possible disturbances of an opening movement of assemblies 13,14, e.g. jamming of a human body part such as a finger between a housing of the machine and a therein movable assembly of brewing unit 2.

Control unit 11 of machine 1 is configured for comparing the variation of the actual current consumption to referential curves 40 and 41 depending on the relevant mode brewing unit 2 is engaged in. Such configuration is obtained by software. It is of course possible to compare the actual current consumption to referential curves over selected portions only, i.e. portions that are decisive for the process of generating the input to the activation means.

If a capsule 30 is inserted in brewing unit 2, and no abnormal variation of the current absorption 40,40a is detected, a brewing cycle can be initiated. The start of the brewing cycle can be triggered by a command or request on the user's interface 12. Alternatively, the start of the brewing cycle can be triggered automatically by the reaching of the closed position.

If no capsule is inserted into brewing chamber 2 and no abnormal variation of the current absorption 41,41a is detected, a rinsing and/or de-scaling mode with reduced or increased temperature to allow optimal de-scaling and/or save energy is initiated in the closed position (Figure 3). The start of rinsing and/or de-scaling cycle can also be triggered by a command or request on the user's interface 12. Alternatively, the start of the rinsing and/or de-scaling cycle can be triggered automatically by the reaching of the closed position. If no capsule is inserted into brewing chamber 2 and no abnormal variation of the variation of the current absorption is detected, a cup-preheating mode may be initiated that involves the dispensing of heated water into a user-cup for preheating thereof prior to preparing and dispensing a beverage. Preheating of the cup may be carried out at beverage preparation temperature or at a reduced temperature or even at a higher temperature.

Curves 40,40a illustrating exemplary revolutions of current consumption over time by motor 3 when a capsule 30 is inserted into brewing unit 2, includes various phases:
When assemblies 13,14 are in the open position (Fig. 6) and before motor 3 is powered, the power consumption by the motor can be at 0, e.g. 0 amp.

An initial portion 401, i.e. a sharp increase of current consumption reflects initial powering of motor 3 to bring the movable assembly, e.g. assembly 14, in motion (Fig. 7), in particular the power consumption needed to overcome the static friction forces of assembly 14 relative to assembly 13.

A second portion 402, may start at a level slightly below the top of portion 401 (the dynamic friction forces being lower than the static friction forces) and increase slowly.

Along portion 402 is illustrated the increasing resistance caused by capsule 30 progressively entering from the outside through mouth 293 into brewing chamber 29 during closure. A maximum 403 is reached when capsule 30 is forced out of an intermediate position in which it is supported by stop members 31"', e.g. as for example explained in EP 2 103 236.

This increase along portion 402 before peak 403 illustrates the capsule-generated friction resistance against closure of assemblies 13,14. The outer surface of capsule sidewall 301 and the inner surface of mouth 293 of capsule receptacle 291 are urged together (Figs 8 and 9) and contact each other in a sliding friction relationship over a fraction VIII'-IX' of capsule sidewall 301 (Fig. 12). This capsule-generated resistance against the closure of assemblies 13,14 affects the power consumption of motor 3 during closure and the measured parameter over time (portion 402) whereupon an input is provided to the activation means.

As mentioned above, it is not necessary to compare the current consumption to the normal consumption over the entire curve. For example, it may be sufficient to monitor and compare the current consumption only nearby peak 403 (in the capsule closure mode) to determine and provide a meaningful input to the activation means. It may also be useful to measure and compare the current consumption level at and about the beginning of the ramp leading to peak 403, to check that no capsule is jammed, e.g. because of displacement, at the entry (e.g. mouth 293 of capsule chamber 29. In particular, there may be no absolute necessity in controlling the current consumption over the entire sliding contact between mouth 293 and sidewall 301. Generally speaking, it may be sufficient to monitor the consumption of current on the portions of the curve at which specific variable events can be expected (e.g. presence or absence of a capsule 30) which is pertinent to a decision-making process for determining the input to the activation means.

It is possible to compare the power consumption by motor 3 to a set reference 42 during the entire transfer of assemblies 13,14.

For instance, in a simple mode of operation, set reference 42 (indicated in dotted lines in Figs 5 and 5a) represents a level which should not be exceeded by the measured electrical parameter 40,40a,41,41a before assemblies 13,14 reach their closed positions.

For instance, if the measured electrical parameter 40,40a,41,41a exceeds set reference 42 before a safety period of time "S" has lapsed since the beginning of the powering of motor 3 for the transfer of assemblies 13,14 from the open to the closed positions, motor 3 is reversed, or at least stopped, to allow unjamming or unclogging e.g. of a misplaced capsule 30 or a human body part such as a finger stuck between assemblies 13,14. If the measured electrical parameter 40,40a,41,41a exceeds set reference 42 after a safety period of time "S" has lapsed since the beginning of the powering of motor 3 for the transfer of assemblies 13,14 from the open to the closed positions, motor 3 is stopped as assemblies 13,14 are believed to have reached their closed position. In this latter case, water circulation may be allowed into brewing unit 2, typically either for preparing a beverage or for servicing brewing unit 2 depending on the presence or absence of a capsule 30 between assemblies 13,14.

The safety period of time "S" may correspond to a position of assemblies 13,14 which is expected to be closer to the closed position than to the open position. In particular, the safety period of time may be greater than 50% of the expected transfer time (the "capsule transfer time") needed for transferring assemblies 13,14 from their open to their closed positions in a "capsule closure mode". The safety period of time may be smaller than 95% of the expected transfer time (the "empty transfer time") needed for transferring assemblies 13,14 from their open to their closed positions in an "empty closure mode". For example, the safety period of time "S" is set in a range from 55% of the "capsule transfer time" to 75 or 90% of the "empty transfer time".

In the example illustrated in Fig. 5, the "capsule transfer time" (curve 40) is of about 2.3 sec, the "empty transfer time" (curve 41) is of about 1.9 sec, and the safety period of time "S" is set at about 1.6 sec. In this case, the safety period of time "S" corresponds to about 70% of the "capsule transfer time" and 85% of the "empty transfer time". In the example illustrated in Fig. 5a, the "capsule transfer time" (curve 40a) is of about 2.65 sec, the "empty transfer time" (curve 41a) is of about 2.5 sec, and the safety period of time "S" is set at about 1.55 sec. In this case, the safety period of time "S" corresponds to about 58% of the "capsule transfer time" and 62% of the "empty transfer time".

Set reference 42 may be at a constant level or at a variable level over time. In particular, set reference may have different constant levels over time. For instance, at start-up of motor 3, reference 42 may be at a higher level to allow motor 3 and assemblies 13,14 to overcome the static friction forces that are higher than the dynamic friction forces. Thereafter, reference 42 may be lowered to lower the force developed by motor 3 when an unwanted obstacle is encountered during the transfer of assemblies 13,14. Finally reference 42 may be put at a higher level to take into account the greater resistance motor 3 has to overcome towards closure. In particular reference 42 may more or less follow the expected forces that motor 3 has to overcome during the transfer from the open to the closed positions.

In Fig. 5, set reference 42 is at an initial level of about 1.55 amp, at an intermediate level of 1.3 amp and at a final level of about 1.55 amp. In Fig. 5a, the different levels of set reference 42 are 0.8 amp, 0.6 amp and 0.8 amp. Motor 3 used in the Example of Fig. 5 is larger than the motor used in the Example of Fig. 5a.

As illustrated in Figs 7 to 10, sidewall 301 of capsule 30 may have a centrally-extending capsule axis 303' generally perpendicular to capsule top 303 and capsule bottom 302. Mouth 293 of capsule receptacle 291 can have a central receptacle axis 293' generally perpendicular to mouth 293. Capsule axis 303' and receptacle axis 293' may be at an angle when assemblies 13,14 are in the open position and capsule 30 is retained thereinbetween. Axis 293', 303' are brought together, in particular until general superposition of axis 293', 303', during closure of assemblies 13,14.

As illustrated on Figs 8, 9 and 12, when assemblies 13,14 are driven towards the closed position with capsule 30 thereinbetween and until capsule axis 303' and receptacle axis 293' are brought generally in superposition, capsule sidewall 301 and mouth 293 of the capsule receptacle 291 are urged together and contact each other in a sliding friction relationship over fraction VIII'-IX' of capsule sidewall 301:
- at a distance from the capsule bottom 302, such distance from capsule bottom 302 optionally corresponding to at least 2%, in particular in the range of 5 to 50 such as 7 to 45%, of the length of sidewall 301 extending from the capsule bottom 302 to the capsule top 303; and/or
- at a distance from capsule top 303, such distance from capsule top 303 optionally corresponding to at least 10%, in particular in the range of 15 to 35%, of the length of sidewall 301 extending from the capsule bottom 302 to the capsule top 303; and/or
- over a distance that corresponds to at least 20%, in particular in the range of 30 to 85% such as 45 to 80%, of a length of sidewall 301 extending from capsule bottom 302 to capsule top 303.

For instance, in the case of a Nespresso Classic capsule, i.e. formed of a generally frusto-conical aluminium cup and lid and having a length of sidewall 301 extending from bottom 302 to top 303 of about 23.5 mm e.g. as generally illustrated in Fig. 12, the sliding friction relationship over fraction VIII'-IX' may:
- start at a distance from capsule bottom 302 in the range of 0.5 to 3.5 mm, such as 1 to 3 mm;
- extend along sidewall 301 over a distance in the range of 11.5 to 14.5 mm, such as 12 to 14 mm; and
- end at a distance from capsule top 303 in the range of 4 to 7 mm, such as 4.5 to 6.5 mm.

The span of 2 to 3 mm of the ranges of the above dimensions and locations of the sliding friction relationship VIII'-IX' is linked to the manufacturing tolerances and variations of dimensions of capsule 30 and assemblies 13,14.

Of course, capsules with different dimensions or assemblies of different shapes may lead to different sliding friction relationships. The length of suitable capsule sidewalls 301 may be in the range of 15 to 25 mm. The spacing of the sliding friction relationship to top 303 may be in the range of 2 to 8 mm and to bottom 302 may be in the range of 0.5 to 10 mm.

The abovementioned length of sidewall 301 extending from capsule bottom 302 to capsule top 303 may be the length of a generator line 301' (dashed segment in Fig. 12) as described hereafter.

Typically, as illustrated in Figs 8, 9 and 12, the sliding friction relationship between mouth 293 and capsule sidewall 301 extends along a fraction of a generator line 301' of capsule sidewall 301, in particular an upwardly-situated generator line 301' of sidewall 301 when entering mouth 293.

Capsule sidewall 301 and mouth 293 of capsule receptacle 291 can be urged together and contact each other in a sliding friction relationship over a top spot 295 of mouth 293.

Moreover, when assemblies 13,14 are driven towards the closed position with a capsule 30 thereinbetween and
- before capsule axis 303' and receptacle axis 293' are brought generally in superposition, capsule sidewall 301 and mouth 293 of capsule receptacle 291 can be urged together and contact each other in a sliding friction relationship over an upwardly-oriented fraction VIII'-IX' of capsule sidewall 301 and a top spot 295 of mouth 293 (Figs 8 and 9), and
- once capsule axis 303' and receptacle axis 293' are generally in superposition (Figs 10 and 11), capsule sidewall 301 and mouth 293 of capsule receptacle 291 can be urged together and contact each other in a sliding friction relationship over a downwardly-oriented fraction of the capsule sidewall 301 and a bottom spot 296 of the mouth 293; typically this downwardly oriented fraction has a length that corresponds approximately to the distance on sidewall 301 (or along generator line 301') between point IX' and capsule top 303.

After capsule axis 303' and receptacle axis 293' are brought generally in superposition, capsule 3 has been moved out from its first or intermediate position (Fig. 7) and in moved into its second or extraction position (Figs 10 and 11).

Once capsule and receptacle axis 303',293' are generally in superposition, the current consumption of motor 3 drops slightly until it reaches a minimum 404, as shown in Figs 5 and 5a. In this configuration (between Figs 9 and 10), the current consumption is at a minimum, reflecting the minimal resistance against closure of assemblies 13, 14 by capsule 30.

Thereafter, current consumption 405,406,407 increases over a span indicated "X" in Figs 5 and 5a, due to the deformation and progressive piercing of bottom 302 of capsule 30 by blades 15 during closure, as illustrated in Fig. 10. In parallel to the piercing and/or slightly thereafter, capsule 30 encounters friction holding members 294 which generate a resistance against closure. This increases the current consumption as well. The capsule-generated resistance at locations X (Fig. 10) of capsule 30 is reflected by the corresponding rise of the power consumption of motor 3 in Figs 5 and 5a.

In other words, at least one of assemblies 13,14 may comprise piercing means, such as blades 15, for piercing capsule 30 during the closure of assemblies 13,14. Piercing means 15 are typically located within capsule receptacle 291 and are arranged to pierce capsule bottom 302. Piercing means 15 can be forced into capsule 30 by piercing thereof when assemblies 13, 14 are driven towards the closed position with capsule 30 thereinbetween. Thereby, a capsule-generated resistance against closure of assemblies 13,14 is created that affects the power consumption of motor 3 during closure and the abovementioned measured parameter over time, e.g. the current consumption by motor 3 over time, to provide a corresponding input to control unit 11 confirming normal piercing of capsule 30, e.g. for stopping or continuing or reversing the powering of the motor or for allowing supply of water to brewing chamber 29 to prepare a beverage by mixing with the ingredient in capsule 30 at the end of closure. Piercing means 15 can be forced into capsule 30 upon completion of said sliding friction relationship over fraction VIII'-IX' of capsule sidewall 301.

Likewise, capsule receptacle 291 of one assembly 13 may include one or more friction holding members 294, e.g. members projecting into chamber 29, for unsticking and separating the capsule 30 from assembly 14 upon reopening of assemblies 13,15, in particular from delivery plate 16 which is exposed to a beverage flow that may lead to sticking of capsule top 303 thereagainst. Should capsule 30 remain stuck against plate 16 upon reopening of assemblies 13,14, capsule 30 would be prevented from freely falling along the lower part of passage 31 into a used capsule collection area 32 (Fig. 6), e.g. a used capsule collector as for example known from WO 2009/074559 and the references mentioned therein. Friction holding member(s) 294 can be forced against capsule 30 to slightly grip capsule 30. Thereby, a capsule-generated resistance against closure of assemblies 13,14 is created that affects the power consumption of the motor 3 during closure and the abovementioned measured parameter over time to provide a corresponding input to control unit 11. Friction holding member(s) 294 are typically forced against the capsule 30 upon completion of the sliding friction relationship over fraction VIII'-IX' of capsule sidewall 301.

Upon unsticking from plate 16, capsule 30 may be released from holding members 294 by retaining capsule rim 304 e.g. in generally upright guide channels or slides 31" while capsule 30 is withdrawn from receptacle 291 while assemblies 13,14 are moved from the closed to the open positions (not shown).

The more or less flat portion 408 in Figs 5 and 5a represents the power consumption by motor 3 over the final approach of assemblies 13,14 into their closed position.

Moreover, in Figs 5 and 5a, the effect of the stressing of a spring 9", e.g. a compression spring, mounted inbetween capsule receptacle 291 and receptacle holder 291' is compensated by the geometry of the cam drive 22,23 therefore, the current consumption remains more or less flat (see portion 408' extending over a span X' in Fig. 5a). An assembly 13 with a holder 291' having a spring 9" for urging capsule receptacle 291 against cooperating assembly 14 permits to compensate a play and manufacturing tolerances between assemblies 13,14 and optionally capsule rim 304 in the closed position.

In the absence of a spring, smaller manufacturing tolerances are required or a different compensation of manufacturing tolerances, such as a manual compensation (e.g. by fine adjustment of the closure distance) and/or a delayed compensation (e.g. hydraulic sealing upon closure of the assemblies) for taking up the play is needed.

As illustrated in Fig. 11, mouth 293 of capsule receptacle 291 is urged against the peripheral part 304, e.g. a flange or collar, of capsule top 303, as indicated by arrows XI. In other words part 304 is squeezed between mouth 293 and assembly 14 to form a fluid-tight sealing between assemblies 13,14.

When assemblies 13,14 reach their closed position, their movement is stopped. The current consumption starts to rise at 409 due to the blockage of the movement.

Once the current consumption reaches maximum 410, the maximum power is consumed by motor 3 which indicates that the motor 3 is blocked and cannot displace assemblies 13,14 any further: assemblies 13,14 are in their fully closed position and the current consumption curves 40,40a, 41,41a intercept set reference 42. At this point the powering of motor 3 is stopped.

Furthermore, assemblies 13,14 and capsule 30 may be configured so that, when assemblies 13,14 are in the open position with a misinserted capsule 30, e.g. a deformed capsule stuck upwardly in passage 31 so as to interfere with the displacement of capsule receptacle 291, and assemblies 13,14 are then driven from the open position to the closed position, a capsule-generated resistance against closure of assemblies 13,14, in particular preventing the closure of assemblies 13,14, is created that affects the power consumption of motor 3 during closure and the above measured parameter over time to provide a corresponding safety input to motor 3 of the activation means, in particular an input for stopping motor 3 or inverting motor 3 to move assemblies 13,14 back to the open position.

As mentioned above, curves 41,41a illustrate exemplary evolutions of current consumption over time by motor 3 when no capsule is inserted into brewing unit 2. This evolution includes various phases:
Portion 411 corresponds to portion 401, i.e. the movable assembly is put in motion. Once the assembly is in motion, portions 412,413 and 414 illustrate essentially the force distribution of the rotating cam-follower 23 moving in the straight grooves 22 and assembly 13 moving generally perpendicularly to the direction of grooves 22 combined with the effect of stressing spring 9", e.g. a compression spring. Portions 416,417 illustrate the power consumption increase to a maximum level 42 due to the reaching of assemblies 13,14 in the closed position. Like above, once the current consumption reaches maximum 417, the maximum power is consumed by motor 3 which indicates that the resistance against motor 3 is complete: the assemblies are in their closed position.

As illustrated in Fig. 5 by way of example, the time needed for closing the assemblies when no capsule is inserted into brewing unit 2, is slightly shorter, approx 0.5 sec, than when motor 3 has to overcome additional forces caused by the presence of a capsule 3. Overall, closure can be achieved within 2 or 2.5 sec, as illustrated with this particular embodiment of the invention. Similar observations can be made in Fig. 5a.

The time needed for opening of closing the assemblies of a brewing unit may typically be in the range of 1 to 10 sec., such as 1 to 5 sec., in particular 1.5 to 3.5 sec.

When the measure 40,40a,41,41a of the current absorption exceeds set reference 42 significantly before reaching the closed position, e.g. before safety period of time "S" , it can be expected that an undesirable obstacle is located between the assemblies or that the system is jammed or suffers from another malfunction. Consequently, a safety input can be activated. The safety input preferably comprises the operation of inverting the motor action to move the movable assembly back into the open position. Alternatively, the safety input may amount to reducing or stopping the drive action of the motor. This safety measure protects for example the user from jamming a finger in the running mechanism. For example, the safety input may be triggered when the resistance against closure of the assemblies exceeds 50, 80, 100, 125 or 150 N before reaching the closed position. For instance, the safety input may be triggered when an excessive resistance occurs at a distance between the assemblies before closure which is greater than 1 or 2 mm, in particular greater than 3 mm or 4 mm or 6 mm or 8 mm.

The gear assembly is preferably configured to provide a gear ratio of at least 1:100, preferably comprised between 1:200 and 1:500 such as between 1:250 and 1:450, e.g. 1:300. Due to this relatively high gear ratio, another benefit of the present invention comes from the possibility to use relatively low power motor, for example comprised between 20 - 50 mNm.

Motor 3 can be a low power motor configured to generate a maximum torque of no more than 50 mNm; and/or consume a maximum power of no more than 50 watt, for driving movable assembly 14 between the open and closed positions and/or not exceeding 50 watt. For instance, motor 3 is arranged to generate a maximum torque of at least 20 mNm, in particular a maximum torque in the range of 25 to 40 mNm. Motor 3 can be arranged to consume a maximum power in the range of 7 to 25 watt, in particular 10 to 15 watt.

The motor can have an angular speed of up to 10K RPM, such as from 0 to 5000 RPM.

By providing a low power motor, it is possible to simplify the construction and control of the motorized machine. As compared to high power motors, a low power motor has a smaller inertia due to the reduced mechanical inertia and lower power load. Hence, temporary variations of the force (or torque) required from the motor, e.g. to overcome an obstacle or additional friction, is not or less absorbed by the dampening effect of the mechanical inertia and electric load of the motor but timely translated in a temporary increase of required electric powering of the motor. Moreover, since the motor has a lower mechanical and electric inertia, interrupting the powering of the motor is not followed by a significant discharge of the energy load (mechanical and electric) of the motor into the mechanical system. It follows that by using a low power motor, the actual mechanical behavior of the relatively movable assemblies can be monitored via the power consumption of the motor. Moreover, the machine does not require end position sensors to stop the motor when it is about to reach the end positions. The reaching of an obstacle at the end position can be nearly instantaneously identified by monitoring the power consumption of the motor the powering of which can be stopped without the risk of the motor forcing the assemblies detrimentally beyond the end position by discharging its mechanical and electric inertia.

## Claims

1. A system comprising a capsule (30) and a beverage machine (1) having a brewing unit (2) and activation means, wherein:
- the capsule (30) has a sidewall (301) joined to a capsule bottom (302), and a capsule top (303), the sidewall, bottom and top forming a generally cup-shaped container for containing a beverage ingredient;
- the brewing unit (2) comprises a first assembly (13) and a second assembly (14) cooperating together, one of the assemblies (13,14) comprising a capsule receptacle, such as a cup-shaped capsule receptacle (291), having a sidewall (292) and a mouth (293) and delimiting with the other assembly (14) at least part of a brewing chamber (29) for containing the ingredient capsule (30); and
- the activation means include means for supplying water, in particular heated water, to the brewing chamber and means for driving at least one of the assemblies:
- away from the cooperating assembly into an open position for forming between the assemblies a passage (31) for inserting into and/or removing from the brewing unit the ingredient capsule; and
- to the cooperating assembly into a closed position for forming said brewing chamber (29),
the capsule (30), the brewing unit (2) and the drive means (3,4) being arranged so that:
- when the assemblies (13,14) are in the open position, the capsule (30) inserted via the passage (31) is retained between the assemblies in a retained position;
- when the assemblies are driven by the drive means to transfer the assemblies from the open position to the closed position, the capsule bottom (302) and at least part of the capsule sidewall (301) enter the capsule receptacle (291) via its mouth (293); and
- when the assemblies are in the closed position, the capsule is in a brewing position in the brewing chamber (29),
**characterised in that** the activation means include a motor (3) for driving the assemblies between the open and closed positions and control means (10) for controlling the water supply means and the drive action of the motor, the control means (10) comprising:
- means for measuring at least one electrical parameter (40,40',40a,41,41',41a) representative of a consumption of power by the motor and for comparing to at least one set reference (42,42') an evolution of said measured parameter over time during the transfer of the assemblies (13,14) from the open to the closed position; and
- means for providing to said activation means an input resulting from the comparison of the evolution of said measured parameter(s) to said set reference(s),
wherein the assemblies (13,14) and the capsule (30) are arranged so that, when the capsule is retained in the open position and the assemblies are then driven from the open position towards the closed position, the capsule sidewall (301) and the mouth (293) of the capsule receptacle (291) are urged together and contact each other in a sliding friction relationship over a fraction (VIII'-IX') of the capsule sidewall (301) so as to create a capsule-generated resistance against closure of the assemblies that affects the power consumption of the motor during closure and said measured parameter over time to generate a corresponding input to the activation means, in particular for stopping or continuing or for reversing a powering of the motor.

2. The system of claim 1, wherein at least one of said electrical parameter(s) (40,40a,41,41a) and at least one of said set reference (s) (42) are continuously or intermittently compared, in particular periodically compared, during the transfer of the assemblies (13,14) from the open to the closed positions, in particular to detect a blocking obstacle inbetween the assemblies during the transfer, optionally said electrical parameter(s) (40,40a,41,41a) and said set reference(s) (42) being compared at a frequency in the range of 3 to 1000 s⁻¹, in particular 5 to 300 s⁻¹, such as 10 to 100 s⁻¹.

3. The system of claim 1 or 2, wherein at least one electrical parameter (40',41') and at least one set reference (42') are compared once the assemblies (13,14) have been transferred from the open to the closed positions, in particular to detect a presence of the capsule (30') inbetween the assemblies.

4. The system of claim 3, wherein said electrical parameter(s) (40',41') and said set reference(s) (42') are representative of a cumulated consumption of power by the motor during the transfer from the open to the closed positions of the assemblies (13,14).

5. The system of any preceding claim, wherein the sidewall (301) of the capsule (30) has a centrally-extending capsule axis (303') generally perpendicular to the capsule bottom (302) or the capsule top (303) and wherein the mouth (293) of the capsule receptacle (291) has a central receptacle axis (293') generally perpendicular to the mouth, the capsule axis (303') and the receptacle axis (293') being at an angle when the assemblies (13,14) are in the open position and the capsule is retained thereinbetween, the axis (293',303') being brought together, in particular until general superposition of the axis (293',303'), during closure of the assemblies (13,14).

6. The system of any preceding claim, wherein, when the assemblies (13,14) are driven towards the closed position with a capsule (30) thereinbetween and until a central capsule axis (303') and a central receptacle axis (293') are brought generally in superposition, the capsule sidewall (301) and the mouth (293) of the capsule receptacle (291) are urged together and contact each other in a sliding friction relationship over a fraction (VIII'-IX') of the capsule sidewall (301) at a distance from the capsule bottom (302).

7. The system of claim 6, wherein said distance from the capsule bottom corresponds to at least 2%, in particular in the range of 5 to 50 such as 7 to 45%, of a length of the sidewall (301) extending from the capsule bottom (302) to the capsule top (303).

8. The system of any preceding claim, wherein, when the assemblies (13,14) are driven towards the closed position with a capsule (30) thereinbetween and until a central capsule axis (303') and a central receptacle axis (293') are brought generally in superposition, the capsule sidewall (301) and the mouth (293) of the capsule receptacle (291) are urged together and contact each other in a sliding friction relationship over a fraction (VIII'-IX') of the capsule sidewall (301) at a distance from the capsule top (303).

9. The system of claim 8, wherein said distance from the capsule top corresponds to at least 10%, in particular in the range of 15 to 35%, of a length of the sidewall (301) extending from the capsule bottom (302) to the capsule top (303).

10. The system of any preceding claim, wherein said fraction (VIII'-IX') of the capsule sidewall (301) extends over a distance that corresponds to at least 20%, in particular in the range of 30 to 85% such as 45 to 80%, of a length of the sidewall (301) extending from the capsule bottom (302) to the capsule top (303).

11. The system of any preceding claim, wherein the sliding friction relationship between the mouth (293) and the capsule sidewall (301) extends along a fraction of a generator line (301') of the sidewall (301), in particular an upwardly-situated generator line (301') of the sidewall (301) when entering the mouth (293).

12. The system of any preceding claim, wherein the capsule sidewall (301) and the mouth (293) of the capsule receptacle (291) are urged together and contact each other in a sliding friction relationship over a top spot (295) of the mouth.

13. The system of any preceding claim, wherein, when the assemblies (13,14) are driven towards the closed position with a capsule (30) thereinbetween and
- before a central capsule axis (303') and a central receptacle axis (293') are brought generally in superposition, the capsule sidewall (301) and the mouth (293) of the capsule receptacle (291) are urged together and contact each other in a sliding friction relationship over an upwardly-oriented fraction (VIII'-IX') of the capsule sidewall (301) and a top spot (295) of the mouth (293), and
- once the central capsule axis (303') and the central receptacle axis (293') are generally in superposition, the capsule sidewall (301) and the mouth (293) of the capsule receptacle (291) are urged together and contact each other in a sliding friction relationship over a downwardly-oriented fraction of the capsule sidewall (301) and a bottom spot (296) of the mouth (293).

14. The system of any preceding claim, wherein at least one of the assemblies (13,14) comprises piercing means, such as blades (15), for piercing the capsule (30), the piercing means being forced into the capsule (30) by piercing thereof when the assemblies (13,14) are driven towards the closed position with a capsule (30) thereinbetween, whereby a capsule-generated resistance against closure of the assemblies is created that affects the power consumption of the motor (3) during closure and said measured parameter over time to provide a corresponding input to the activation means.

15. The system of claim 14, wherein the piercing means (15) are forced into the capsule (30) upon completion of said sliding friction relationship over said fraction (VIII'-IX') of the capsule sidewall (301).

16. The system of any preceding claim, wherein the capsule receptacle (291) of one assembly (13) comprises one or more friction holding members (294) for unsticking and separating the capsule (30) from the cooperating assembly (14) upon reopening of the assemblies.

17. The system of claim 16, wherein, when the assemblies (13,14) are driven towards the closed position with a capsule (30), the friction holding member(s) (294) are forced against the capsule (30) to slightly grip the capsule, whereby a capsule-generated resistance against closure of the assemblies is created that affects the power consumption of the motor (3) during closure and said measured parameter over time to provide a corresponding input to the activation means.

18. The system of claim 16 or 17, wherein the friction holding member(s) (294) are forced against the capsule (30) upon completion of said sliding friction relationship over said fraction (VIII'-IX') of the capsule sidewall (301).

19. The system of any preceding claim, wherein the assemblies (13,14) and the capsule (30) are arranged so that, when the assemblies are in the open position with a misinserted capsule (30) and the assemblies are then driven from the open position to the closed position, a capsule-generated resistance against closure of the assemblies, in particular preventing the closure of the assemblies, is created that affects the power consumption of the motor during closure and said measured parameter over time to provide a safety input to the motor (3) of the activation means, in particular an input for stopping the motor or inverting the motor to move the assemblies back to the open position.

20. A method for operating a system as defined in any preceding claim, comprising:
- inserting the capsule (30) via the passage (31) into the retained position;
- transferring the assemblies (13,14) from their open to their closed position so that the capsule bottom (302) and at least part of the capsule sidewall (301) enter the capsule receptacle (291) via its mouth (293);
- closing the assemblies so that the capsule is in its brewing position in the brewing chamber (29),
at least one of the assemblies being driven by the motor (3) of the activation means between the open and the closed position,
wherein the measuring means measure at least one electric parameter (40,40',40a,41,41',41a) representative of the consumption of power by the motor and for comparing to at least one set reference (42,42') an evolution of said measured parameter over time during the transfer of the assemblies (13,14) from the open to the closed position,
wherein the input providing means provide to said activation means an input resulting from the comparison of the evolution of said measured parameter(s) to said set reference(s), and
wherein, when the capsule (30) is retained in the open position and the assemblies (13,14) are then driven from the open position towards the closed position, the capsule sidewall (301) and the mouth (293) of the capsule receptacle (291) are urged together and contact each other in a sliding friction relationship over a fraction (VIII'-IX') of the capsule sidewall (301) so as to create a capsule-generated resistance against closure of the assemblies that affects the power consumption of the motor during closure and said measured parameter over time to generate a corresponding input to the activation means, in particular for stopping or continuing or for reversing a powering of the motor.

21. Use, for providing a system as defined in any one of claims 1 to 19 or for carrying out a method as defined in claim 20, of a capsule sidewall (301) of an ingredient capsule (30) as a resistance-generator affecting an input to said activation means.

22. Use according to claim 21, wherein the capsule (30) has a generally cylindrical and/or conical sidewall (301).

23. Use according to claim 21 or 22, of a capsule bottom (302) of the ingredient capsule (30) as a resistance-generator affecting an input to said activation means.

24. Use, for a capsule (30) for a use as defined in any one of claims 21 to 23, of at least one of coffee, tea, chocolate, milk and soup constituents as an ingredient.

## Patentansprüche

1. System, eine Kapsel (30) und eine Getränkemaschine (1) mit einer Brüheinheit (2) und Aktivierungsmitteln umfassend, wobei:
- die Kapsel (30) eine mit einem Kapselboden (302) verbundene Seitenwand (301) und eine Kapseloberseite (303) aufweist, wobei die Seitenwand, der Boden und die Oberseite einen im Allgemeinen becherförmigen Behälter zum Aufnehmen einer Getränkezutat bilden;
- die Brüheinheit (2) eine erste Baugruppe (13) und eine zweite Baugruppe (14) umfasst, die zusammenwirken, wobei eine der Baugruppen (13, 14) eine Kapselaufnahme, wie eine becherförmige Kapselaufnahme (291) mit einer Seitenwand (292) und einer Mündung (293) umfasst und mit der anderen Baugruppe (14) mindestens einen Teil einer Brühkammer (29) zum Aufnehmen der Zutatenkapsel (30) begrenzt; und
- die Aktivierungsmittel Mittel zum Zuführen von Wasser, insbesondere von erhitztem Wasser, zur Brühkammer einschließen sowie Mittel zum Antreiben mindestens einer der Baugruppen:
- von der zusammenwirkenden Baugruppe weg in eine offene Position, um zwischen den Baugruppen einen Durchgang (31) zu bilden, um die Kapsel in die Brüheinheit einzusetzen und/oder daraus zu entfernen; und
- zu der zusammenwirkenden Baugruppe hin in eine geschlossene Position, um die Brühkammer (29) zu bilden,
wobei die Kapsel (30), die Brüheinheit (2) und die Antriebsmittel (3, 4) so angeordnet sind, dass:
- die durch den Durchgang (31) eingesetzte Kapsel (30) zwischen den Baugruppen in einer Halteposition gehalten wird, wenn sich die Baugruppen (13, 14) in der offenen Position befinden;
- der Kapselboden (302) und mindestens ein Teil der Kapselseitenwand (301) über die Mündung (293) in die Kapselaufnahme (291) eintreten, wenn die Baugruppen von den Antriebsmitteln angetrieben werden, um die Baugruppen von der offenen Position in die geschlossene Position zu versetzen; und
- die Kapsel sich in einer Brühposition in der Brühkammer (29) befindet, wenn sich die Baugruppen in der geschlossenen Position befinden,
**dadurch gekennzeichnet, dass** die Aktivierungsmittel einen Motor (3) zum Antreiben der Baugruppen zwischen der offenen und der geschlossenen Position sowie Steuermittel (10) zum Steuern der Wasserzufuhrmittel und der Antriebswirkung des Motors einschließen, wobei die Steuermittel (10) umfassen:
- Mittel zum Messen mindestens eines elektrischen Parameters (40, 40', 40a, 41, 41', 41 a), der repräsentativ für eine Leistungsaufnahme durch den Motor ist, und zum Vergleichen einer Entwicklung des gemessenen Parameters über die Zeit während des Versetzens der Baugruppen (13, 14) von der offenen in die geschlossene Position mit mindestens einer eingestellten Referenz (42, 42'); und
- Mittel zum Bereitstellen eines aus dem Vergleich der Entwicklung des gemessenen Parameters bzw. der gemessenen Parameter mit der eingestellten Referenz bzw. den eingestellten Referenzen resultierenden Eingangs an die Aktivierungsmittel,
wobei die Baugruppen (13, 14) und die Kapsel (30) so angeordnet sind, dass, wenn die Kapsel in der offenen Position gehalten wird und die Baugruppen dann von der offenen Position zur geschlossenen Position hin angetrieben werden, die Kapselseitenwand (301) und die Mündung (293) der Kapselaufnahme (291) zueinander gedrängt werden und einander in einer Gleitreibungsbeziehung über einen Teilbereich (VIII' - IX') der Kapselseitenwand (301) berühren, um einen von der Kapsel erzeugten Widerstand gegen ein Schließen der Baugruppen zu erzeugen, der die Leistungsaufnahme des Motors während des Schließens und den gemessenen Parameter über die Zeit beeinflusst, um einen entsprechenden Eingang an die Aktivierungsmittel, insbesondere zum Anhalten oder Fortfahren oder zum Umkehren eines Antriebs des Motors, zu generieren.

2. System nach Anspruch 1, wobei mindestens einer der elektrischen Parameter (40, 40a, 41, 41 a) und mindestens eine der eingestellten Referenzen (42) während des Versetzens der Baugruppen (13, 14) von der offenen in die geschlossene Position kontinuierlich oder intermittierend verglichen werden, insbesondere periodisch verglichen werden, insbesondere zum Erfassen eines blockierenden Hindernisses zwischen den Baugruppen während des Versetzens, wobei optional der elektrische Parameter bzw. die elektrischen Parameter (40, 40a, 41, 41 a) und die eingestellte Referenz bzw. die eingestellten Referenzen (42) mit einer Frequenz im Bereich von 3 bis 1000 s⁻¹, insbesondere von 5 bis 300 s⁻¹, wie von 10 bis 100 s⁻¹, verglichen werden.

3. System nach Anspruch 1 oder 2, wobei mindestens ein elektrischer Parameter (40', 41') und mindestens eine eingestellte Referenz (42') verglichen werden, sobald die Baugruppen (13, 14) von der offenen in die geschlossene Position versetzt wurden, insbesondere zum Erfassen eines Vorhandenseins der Kapsel (30') zwischen den Baugruppen.

4. System nach Anspruch 3, wobei der elektrische Parameter bzw. die elektrischen Parameter (40', 41') und die eingestellte Referenz bzw. die eingestellten Referenzen (42') repräsentativ für eine kumulierte Leistungsaufnahme durch den Motor während des Versetzens der Baugruppen (13, 14) von der offenen in die geschlossene Position sind.

5. System nach einem der vorstehenden Ansprüche, wobei die Seitenwand (301) der Kapsel (30) eine sich mittig erstreckende Kapselachse (303') aufweist, die im Allgemeinen senkrecht zum Kapselboden (302) oder zur Kapseloberseite (303) verläuft und wobei die Mündung (293) der Kapselaufnahme (291) eine mittige Aufnahmeachse (293') aufweist, die im Allgemeinen senkrecht zur Mündung verläuft, wobei die Kapselachse (303') und die Aufnahmeachse (293') einen Winkel bilden, wenn die Baugruppen (13, 14) sich in der offenen Position befinden und die Kapsel dazwischen gehalten wird, wobei die Achsen (293', 303') während des Schließens der Baugruppen (13, 14) zusammengeführt werden, insbesondere bis zu einer generellen Überlagerung der Achsen (293', 303').

6. System nach einem der vorstehenden Ansprüche, wobei, wenn die Baugruppen (13, 14) mit einer Kapsel (30) dazwischen zur geschlossenen Position hin angetrieben werden und bis eine mittige Kapselachse (303') und eine mittige Aufnahmeachse (293') im Allgemeinen in eine Überlagerung gebracht werden, die Kapselseitenwand (301) und die Mündung (293) der Kapselaufnahme (291) zueinander gedrängt werden und einander in einer Gleitreibungsbeziehung über einen Teilbereich (VIII' - IX') der Kapselseitenwand (301) mit einem Abstand zum Kapselboden (302) berühren.

7. System nach Anspruch 6, wobei der Abstand vom Kapselboden mindestens 2 %, insbesondere im Bereich von 5 bis 50, beispielsweise von 7 bis 45 %, einer Länge der Seitenwand (301) entspricht, die sich vom Kapselboden (302) bis zur Kapseloberseite (303) erstreckt.

8. System nach einem der vorstehenden Ansprüche, wobei, wenn die Baugruppen (13, 14) mit einer Kapsel (30) dazwischen zur geschlossenen Position hin angetrieben werden und bis eine mittige Kapselachse (303') und eine mittige Aufnahmeachse (293') im Allgemeinen in eine Überlagerung gebracht werden, die Kapselseitenwand (301) und die Mündung (293) der Kapselaufnahme (291) zueinander gedrängt werden und einander in einer Gleitreibungsbeziehung über einen Teilbereich (VIII' - IX') der Kapselseitenwand (301) mit einem Abstand zur Kapseloberseite (303) berühren.

9. System nach Anspruch 8, wobei der Abstand von der Kapseloberseite mindestens 10 %, insbesondere im Bereich von 15 bis 35 %, einer Länge der Seitenwand (301) entspricht, die sich vom Kapselboden (302) bis zur Kapseloberseite (303) erstreckt.

10. System nach einem der vorstehenden Ansprüche, wobei sich der Teilbereich (VIII' - IX') der Kapselseitenwand (301) über einen Abstand erstreckt, der mindestens 20 %, insbesondere im Bereich von 30 bis 85 %, beispielsweise von 45 bis 80 %, einer Länge der Seitenwand (301) entspricht, die sich vom Kapselboden (302) bis zur Kapseloberseite (303) erstreckt.

11. System nach einem der vorstehenden Ansprüche, wobei sich die Gleitreibungsbeziehung zwischen der Mündung (293) und der Kapselseitenwand (301) bei Eintreten in die Mündung (293) entlang eines Teilbereichs einer erzeugenden Geraden (301') der Seitenwand (301), insbesondere einer aufwärts gelegenen erzeugenden Geraden (301') der Seitenwand (301) erstreckt.

12. System nach einem der vorstehenden Ansprüche, wobei die Kapselseitenwand (301) und die Mündung (293) der Kapselaufnahme (291) zueinander gedrängt werden und einander in einer Gleitreibungsbeziehung über einen oberen Punkt (295) der Mündung berühren.

13. System nach einem der vorstehenden Ansprüche, wobei, wenn die Baugruppen (13, 14) zur geschlossenen Position hin mit einer Kapsel (30) dazwischen angetrieben werden und
- vorher eine mittige Kapselachse (303') und eine mittige Aufnahmeachse (293') im Allgemeinen in Überlagerung gebracht werden, die Kapselseitenwand (301) und die Mündung (293) der Kapselaufnahme (291) zueinander gedrängt werden und einander in einer Gleitreibungsbeziehung über einen aufwärts gerichteten Teilbereich (VIII' - IX') der Kapselseitenwand (301) und einen oberen Punkt (295) der Mündung (293) berühren, und
- sobald die mittige Kapselachse (303') und die mittige Aufnahmeachse (293') sich im Allgemeinen in Überlagerung befinden, die Kapselseitenwand (301) und die Mündung (293) der Kapselaufnahme (291) zueinander gedrängt werden und einander in einer Gleitreibungsbeziehung über einen abwärts gerichteten Teilbereich der Kapselseitenwand (301) und einen unteren Punkt (296) der Mündung (293) berühren.

14. System nach einem der vorstehenden Ansprüche, wobei mindestens eine der Baugruppen (13, 14) Lochungsmittel wie Klingen (15) umfasst, um die Kapsel (30) zu durchlöchern, wobei die Lochungsmittel unter Durchlöcherung der Kapsel (30) in die dieselbe gedrückt werden, wenn die Baugruppen (13, 14) mit einer Kapsel (30) dazwischen zur geschlossenen Position hin angetrieben werden, wodurch ein von der Kapsel erzeugter Widerstand gegen ein Schließen der Baugruppen erzeugt wird, der die Leistungsaufnahme des Motors (3) während des Schließens und den gemessenen Parameter über die Zeit beeinflusst, um einen entsprechenden Eingang an die Aktivierungsmittel bereitzustellen.

15. System nach Anspruch 14, wobei die Lochungsmittel (15) nach Beenden der Gleitreibungsbeziehung über den Teilbereich (VIII' - IX') der Kapselseitenwand (301) in die Kapsel (30) gedrückt werden.

16. System nach einem der vorstehenden Ansprüche, wobei die Kapselaufnahme (291) einer Baugruppe (13) ein oder mehrere Reibungshalteelemente (294) umfasst, um die Kapsel (30) beim Wiederöffnen der Baugruppen von der zusammenwirkenden Baugruppe (14) zu lösen und zu trennen.

17. System nach Anspruch 16, wobei, wenn die Baugruppen (13, 14) mit der Kapsel (30) zur geschlossenen Position hin angetrieben werden, das Reibungshalteelement bzw. die Reibungshalteelemente (294) gegen die Kapsel (30) gedrückt wird bzw. werden, um die Kapsel leicht zu greifen, wobei ein von der Kapsel erzeugter Widerstand gegen ein Schließen der Baugruppen erzeugt wird, der die Leistungsaufnahme des Motors (3) während des Schließens und den gemessenen Parameter über die Zeit beeinflusst, um einen entsprechenden Eingang an die Aktivierungsmittel bereitzustellen.

18. System nach Anspruch 16 oder 17, wobei das Reibungshalteelement bzw. die Reibungshalteelemente (294) nach Beenden der Gleitreibungsbeziehung über den Teilbereich (VIII' - IX') der Kapselseitenwand (301) gegen die Kapsel (30) gedrückt wird bzw. werden.

19. System nach einem der vorstehenden Ansprüche, wobei die Baugruppen (13, 14) und die Kapsel (30) so angeordnet sind, dass, wenn die Baugruppen sich mit einer fehlerhaft eingesetzten Kapsel (30) in der offenen Position befinden und die Baugruppen dann von der offenen Position zur geschlossenen Position hin angetrieben werden, ein von der Kapsel erzeugter Widerstand gegen ein Schließen der Baugruppen, insbesondere zur Vermeidung des Schließens der Baugruppen, erzeugt wird, der die Leistungsaufnahme des Motors während des Schließens und den gemessenen Parameter über die Zeit beeinflusst, um einen Sicherheitseingang an den Motor (3) der Aktivierungsmittel, insbesondere einen Eingang zum Anhalten des Motors oder zum Invertieren des Motors bereitzustellen, um die Baugruppen zurück in die offene Position zu bewegen.

20. Verfahren zum Bedienen eines Systems wie in einem der vorstehenden Ansprüche definiert, umfassend:
- Einsetzen der Kapsel (30) durch den Durchgang (31) in die Halteposition;
- Versetzen der Baugruppen (13, 14) von ihrer offenen in ihre geschlossene Position, so dass der Kapselboden (302) und mindestens ein Teil der Kapselseitenwand (301) über die Mündung (293) in die Kapselaufnahme (291) eintreten;
- Verschließen der Baugruppen, so dass die Kapsel sich in ihrer Brühposition in der Brühkammer (29) befindet,
wobei mindestens eine der Baugruppen vom Motor (3) der Aktivierungsmittel zwischen der offenen und der geschlossenen Position angetrieben wird,
wobei die Messmittel mindestens einen elektrischen Parameter (40, 40', 40a, 41, 41', 41 a), der repräsentativ für die Leistungsaufnahme durch den Motor ist, und zum Vergleichen einer Entwicklung des gemessenen Parameters über die Zeit mit mindestens einer eingestellten Referenz (42, 42') während des Versetzens der Baugruppen (13, 14) von der offenen in die geschlossene Position messen,
wobei die Mittel zum Bereitstellen eines Eingangs einen aus dem Vergleich der Entwicklung des gemessenen Parameters bzw. der gemessenen Parameter mit der eingestellten Referenz bzw. den eingestellten Referenzen resultierenden Eingang an die Aktivierungsmittel bereitstellen, und
wobei, wenn die Kapsel (30) in der offenen Position gehalten wird und die Baugruppen (13, 14) dann von der offenen Position zur geschlossenen Position hin angetrieben werden, die Kapselseitenwand (301) und die Mündung (293) der Kapselaufnahme (291) zueinander gedrängt werden und einander in einer Gleitreibungsbeziehung über einen Teilbereich (VIII' - IX') der Kapselseitenwand (301) berühren, um einen von der Kapsel erzeugten Widerstand gegen ein Schließen der Baugruppen zu erzeugen, der die Leistungsaufnahme des Motors während des Schließens und den gemessenen Parameter über die Zeit beeinflusst, um einen entsprechenden Eingang an die Aktivierungsmittel zu generieren, insbesondere zum Anhalten oder Fortfahren oder zum Umkehren eines Antriebs des Motors.

21. Verwendung, zum Bereitstellen eines Systems wie in einem der Ansprüche 1 bis 19 definiert oder zum Durchführen eines Verfahrens wie in Anspruch 20 definiert, einer Kapselseitenwand (301) einer Zutatenkapsel (30) als Erzeuger eines Widerstands zum Beeinflussen eines Eingangs an die Aktivierungsmittel.

22. Verwendung nach Anspruch 21, wobei die Kapsel (30) eine im Allgemeinen zylindrische und/oder konische Seitenwand (301) aufweist.

23. Verwendung nach Anspruch 21 oder 22 eines Kapselbodens (302) der Zutatenkapsel (30) als Erzeuger eines Widerstands zum Beeinflussen eines Eingangs an die Aktivierungsmittel.

24. Verwendung, für eine Kapsel (30) für eine Verwendung wie in einem der Ansprüche 21 bis 23 definiert, mindestens einer Komponente von Kaffee, Tee, Schokolade, Milch oder Suppe als Zutat.

## Revendications

1. Système comprenant une capsule (30) et une machine à boisson (1) comportant une unité de percolation (2) et un moyen d'activation, dans lequel :
- la capsule (30) possède une paroi latérale (301) jointe à un fond de capsule (302) et une partie supérieure de capsule (303), la paroi latérale, le fond et la partie supérieure formant un récipient généralement en forme de coupelle, destiné à contenir un ingrédient de boisson ;
- l'unité de percolation (2) comprend un premier ensemble (13) et un deuxième ensemble (14) coopérant ensemble, un des ensembles (13,14) comprenant un réceptacle à capsule, tel qu'un réceptacle à capsule en forme de coupelle (291), comportant une paroi latérale (292) et une embouchure (293) et délimitant avec l'autre ensemble (14) au moins une partie d'une chambre de percolation (29) pour contenir la capsule d'ingrédient (30) ; et
- le moyen d'activation inclut un moyen d'alimentation en eau, en particulier de l'eau chauffée, à la chambre de percolation et un moyen destiné à entraîner au moins un des ensembles :
- à l'écart de l'ensemble coopérant, vers une position ouverte, pour former entre les ensembles un passage (31) pour insérer la capsule d'ingrédient dans l'unité de percolation et/ou l'en retirer ; et
- vers l'ensemble coopérant vers une position fermée, pour former ladite chambre de percolation (29),
la capsule (30), l'unité de percolation (2) et le moyen d'entraînement (3,4) étant disposés de sorte que :
- lorsque les ensembles (13,14) sont dans la position ouverte, la capsule (30) insérée par l'intermédiaire du passage (31) est retenue entre les ensembles dans une position retenue ;
- lorsque les ensembles sont entraînés par le moyen d'entraînement pour transférer les ensembles de la position ouverte à la position fermée, le fond de capsule (302) et au moins une partie de la paroi latérale de capsule (301) entrent dans le réceptacle à capsule (291) par l'intermédiaire de son embouchure (293) ; et
- lorsque les ensembles sont dans la position fermée, la capsule est dans une position de percolation dans la chambre de percolation (29),
**caractérisé en ce que** le moyen d'activation inclut un moteur (3) destiné à entraîner les ensembles entre les positions ouverte et fermée et un moyen de commande (10) permettant de commander le moyen d'alimentation en eau et l'action d'entraînement du moteur, le moyen de commande (10) comprenant :
- un moyen pour mesurer au moins un paramètre électrique (40, 40', 40a, 41, 41', 41 a) représentatif d'une consommation électrique par le moteur et pour comparer à au moins une référence établie (42, 42') une évolution dudit paramètre mesuré au fil du temps pendant le transfert des ensembles (13, 14) de la position ouverte à la position fermée ; et
- un moyen de fourniture audit moyen d'activation d'une entrée résultant de la comparaison de l'évolution dudit(desdits) paramètre(s) mesuré(s) à ladite(auxdites) référence(s) établie(s),
dans lequel les ensembles (13,14) et la capsule (30) sont arrangés de sorte que, lorsque la capsule est retenue dans la position ouverte et que les ensembles sont ensuite entraînés de la position ouverte vers la position fermée, la paroi latérale de capsule (301) et l'embouchure (293) du réceptacle à capsule (291) soient sollicitées ensemble et viennent en contact l'une l'autre dans une relation de frottement par coulissement sur une fraction (VIII' - IX') de la paroi latérale de capsule (301), de façon à créer une résistance générée par la capsule à l'encontre de la fermeture des ensembles, laquelle affecte la consommation électrique du moteur pendant la fermeture et ledit paramètre mesuré au fil du temps pour générer une entrée correspondante au moyen d'activation, en particulier pour arrêter ou continuer ou pour inverser une alimentation du moteur.

2. Système selon la revendication 1, dans lequel au moins l'un parmi ledit ou lesdits paramètre(s) électrique(s) (40, 40a, 41, 41 a) et au moins l'une de ladite ou desdites référence(s) établie(s) (42) sont comparés de façon continue ou intermittente, en particulier, comparés de façon périodique, pendant le transfert des ensembles (13, 14) de la position ouverte à la position fermée, en particulier pour détecter un obstacle de blocage entre les ensembles pendant le transfert, facultativement ledit ou lesdits paramètre(s) électrique(s) (40, 40a, 41, 41a) et ladite ou lesdites référence(s) établie(s) (42) étant comparés à une fréquence dans la plage de 3 à 1000 s⁻¹, en particulier, 5 à 300 s⁻¹, telle que 10 à 100 s⁻¹.

3. Système selon la revendication 1 ou 2, dans lequel au moins un paramètre électrique (40', 41') et au moins une référence établie (42') sont comparés une fois que les ensembles (13, 14) ont été transférés de la position ouverte à la position fermée, en particulier pour détecter une présence de la capsule (30') entre les ensembles.

4. Système selon la revendication 3, dans lequel ledit ou lesdits paramètre(s) électrique(s) (40', 41') et ladite ou lesdites référence(s) établie(s) (42') sont représentatifs d'une consommation électrique cumulée par le moteur pendant le transfert de la position ouverte à la position fermée des ensembles (13, 14).

5. Système selon l'une quelconque des revendications précédentes, dans lequel la paroi latérale (301) de la capsule (30) possède un axe de capsule s'étendant en position centrale (303') généralement perpendiculaire au fond de capsule (302) ou à la partie supérieure de capsule (303) et dans lequel l'embouchure (293) du réceptacle à capsule (291) a un axe central de réceptacle (293') généralement perpendiculaire à l'embouchure, l'axe de capsule (303') et l'axe de réceptacle (293') formant un angle lorsque les ensembles (13, 14) sont dans la position ouverte et que la capsule est retenue entre eux, les axes (293', 303') étant réunis, en particulier jusqu'à superposition générale des axes (293',303'), pendant la fermeture des ensembles (13, 14).

6. Système selon l'une quelconque des revendications précédentes, dans lequel, lorsque les ensembles (13, 14) sont entraînés vers la position fermée avec une capsule (30) entre eux et jusqu'à ce qu'un axe central de capsule (303') et un axe central de réceptacle (293') soient amenés généralement en superposition, la paroi latérale de capsule (301) et l'embouchure (293) du réceptacle à capsule (291) sont sollicitées ensemble et viennent en contact l'une avec l'autre dans une relation de frottement par coulissement sur une fraction (VIII' - IX') de la paroi latérale de capsule (301) à une distance du fond de capsule (302).

7. Système selon la revendication 6, dans lequel ladite distance depuis le fond de capsule correspond à au moins 2 %, en particulier dans la plage de 5 à 50 telle que 7 à 45 %, d'une longueur de la paroi latérale (301) s'étendant du fond de capsule (302) à la partie supérieure de capsule (303).

8. Système selon l'une quelconque des revendications précédentes, dans lequel, lorsque les ensembles (13,14) sont entraînés vers la position fermée avec une capsule (30) entre eux et jusqu'à ce qu'un axe central de capsule (303') et un axe central de réceptacle (293') soient amenés généralement en superposition, la paroi latérale de capsule (301) et l'embouchure (293) du réceptacle à capsule (291) sont sollicitées ensemble et viennent en contact l'une avec l'autre dans une relation de frottement par coulissement sur une fraction (VIII' - IX') de la paroi latérale de capsule (301) à une certaine distance de la partie supérieure de capsule (303).

9. Système selon la revendication 8, dans lequel ladite distance depuis la partie supérieure de capsule correspond à au moins 10 %, en particulier dans la plage de 15 à 35 %, d'une longueur de la paroi latérale (301) s'étendant du fond de capsule (302) à la partie supérieure de capsule (303).

10. Système selon l'une quelconque des revendications précédentes, dans lequel ladite fraction (VIII'- IX') de la paroi latérale de capsule (301) s'étend sur une distance qui correspond à au moins 20 %, en particulier dans la plage de 30 à 85 %, telle que 45 à 80 %, d'une longueur de la paroi latérale (301) s'étendant du fond de capsule (302) à la partie supérieure de capsule (303).

11. Système selon l'une quelconque des revendications précédentes, dans lequel la relation de frottement par coulissement entre l'embouchure (293) et la paroi latérale de capsule (301) s'étend le long d'une fraction d'une ligne génératrice (301') de la paroi latérale (301), en particulier une ligne génératrice située vers le haut (301') de la paroi latérale (301) lors de l'entrée dans l'embouchure (293).

12. Système selon l'une quelconque des revendications précédentes, dans lequel la paroi latérale de capsule (301) et l'embouchure (293) du réceptacle à capsule (291) sont sollicitées ensemble et viennent en contact l'une avec l'autre dans une relation de frottement par coulissement sur un point supérieur (295) de l'embouchure.

13. Système selon l'une quelconque des revendications précédentes, dans lequel, lorsque les ensembles (13, 14) sont entraînés vers la position fermée avec une capsule (30) entre eux et
- avant qu'un axe central de capsule (303') et un axe central de réceptacle (293') soient amenés généralement en superposition, la paroi latérale de capsule (301) et l'embouchure (293) du réceptacle à capsule (291) sont sollicitées ensemble et viennent en contact l'une avec l'autre dans une relation de frottement par coulissement sur une fraction orientée vers le haut (VIII' - IX') de la paroi latérale de capsule (301) et un point supérieur (295) de l'embouchure (293) et
- une fois que l'axe central de capsule (303') et l'axe central de réceptacle (293') sont généralement en superposition, la paroi latérale de capsule (301) et l'embouchure (293) du réceptacle à capsule (291) sont sollicitées ensemble et viennent en contact l'une avec l'autre dans une relation de frottement par coulissement sur une fraction orientée vers le bas de la paroi latérale de capsule (301) et un point inférieur (296) de l'embouchure (293).

14. Système selon l'une quelconque des revendications précédentes, dans lequel au moins l'un des ensembles (13, 14) comprend un moyen de perçage, tel que des lames (15), pour percer la capsule (30), le moyen de perçage étant enfoncé dans la capsule (30) avec force en la perçant lorsque les ensembles (13, 14) sont entraînés vers la position fermée avec une capsule (30) entre eux, moyennant quoi une résistance générée par la capsule à l'encontre de la fermeture des ensembles est créée, laquelle affecte la consommation électrique du moteur (3) pendant la fermeture et ledit paramètre mesuré au fil du temps pour fournir une entrée correspondante au moyen d'activation.

15. Système selon la revendication 14, dans lequel le moyen de perçage (15) est enfoncé dans la capsule (30) avec force à l'achèvement de ladite relation de frottement par coulissement sur ladite fraction (VIII' - IX') de la paroi latérale de capsule (301).

16. Système selon l'une quelconque des revendications précédentes, dans lequel le réceptacle à capsule (291) d'un ensemble (13) comprend un ou plusieurs éléments de maintien de frottement (294) pour décoller et séparer la capsule (30) de l'ensemble coopérant (14) lors de la réouverture des ensembles.

17. Système selon la revendication 16, dans lequel, lorsque les ensembles (13, 14) sont entraînés vers la position fermée avec une capsule (30), le ou les élément(s) de maintien de frottement (294) sont poussés avec force contre la capsule (30) pour saisir légèrement la capsule, moyennant quoi une résistance générée par la capsule à l'encontre de la fermeture des ensembles est créée, laquelle affecte la consommation électrique du moteur (3) pendant la fermeture et ledit paramètre mesuré au fil du temps pour fournir une entrée correspondante au moyen d'activation.

18. Système selon la revendication 16 ou 17, dans lequel le ou les élément(s) de maintien de frottement (294) sont poussés avec force contre la capsule (30) à l'achèvement de ladite relation de frottement par coulissement sur ladite fraction (VIII' - IX') de la paroi latérale de capsule (301).

19. Système selon l'une quelconque des revendications précédentes, dans lequel les ensembles (13, 14) et la capsule (30) sont arrangés de sorte que, lorsque les ensembles sont dans la position ouverte avec une capsule mal insérée (30) et que les ensembles sont ensuite entraînés de la position ouverte à la position fermée, une résistance générée par la capsule à l'encontre de la fermeture des ensembles, empêchant en particulier la fermeture des ensembles, est créée, laquelle affecte la consommation électrique du moteur pendant la fermeture et ledit paramètre mesuré au fil du temps pour fournir une entrée de sécurité au moteur (3) du moyen d'activation, en particulier une entrée pour arrêter le moteur ou inverser le moteur pour ramener les ensembles à la position ouverte.

20. Procédé d'exploitation d'un système selon l'une quelconque des revendications précédentes, comprenant :
- l'insertion de la capsule (30) par l'intermédiaire du passage (31) dans la position retenue ;
- le transfert des ensembles (13, 14) de leur position ouverte à leur position fermée de sorte que le fond de capsule (302) et au moins une partie de la paroi latérale de capsule (301) entrent dans le réceptacle à capsule (291) par l'intermédiaire de son embouchure (293) ;
- la fermeture des ensembles de sorte que la capsule se trouve dans sa position de percolation dans la chambre de percolation (29),
au moins un des ensembles étant entraîné par le moteur (3) du moyen d'activation entre la position ouverte et la position fermée,
dans lequel le moyen de mesure effectue la mesure d'au moins un paramètre électrique (40, 40', 40a, 41, 41', 41 a) représentatif de la consommation électrique par le moteur et compare à au moins une référence établie (42, 42') une évolution dudit paramètre mesuré au fil du temps pendant le transfert des ensembles (13, 14) de la position ouverte à la position fermée,
dans lequel le moyen de fourniture d'entrée fournit audit moyen d'activation une entrée résultant de la comparaison de l'évolution dudit ou desdits paramètre(s) mesuré(s) à ladite ou auxdites référence(s) établie(s) et
dans lequel, lorsque la capsule (30) est retenue dans la position ouverte et que les ensembles (13,14) sont ensuite entraînés de la position ouverte vers la position fermée, la paroi latérale de capsule (301) et l'embouchure (293) du réceptacle à capsule (291) sont sollicitées ensemble et viennent en contact l'une avec l'autre dans une relation de frottement par coulissement sur une fraction (VIII' - IX') de la paroi latérale de capsule (301), de façon à créer une résistance générée par la capsule à l'encontre de la fermeture des ensembles, laquelle affecte la consommation électrique du moteur pendant la fermeture et ledit paramètre mesuré au fil du temps pour générer une entrée correspondante au moyen d'activation, en particulier pour arrêter ou continuer ou pour inverser l'alimentation du moteur.

21. Utilisation, pour fournir un système selon l'une quelconque des revendications 1 à 19 ou pour effectuer un procédé selon la revendication 20, d'une paroi latérale de capsule (301) d'une capsule d'ingrédient (30) en tant que générateur de résistance affectant une entrée vers ledit moyen d'activation.

22. Utilisation selon la revendication 21, dans laquelle la capsule (30) a une paroi latérale généralement cylindrique et/ou conique (301).

23. Utilisation selon la revendication 21 ou 22, d'un fond de capsule (302) de la capsule d'ingrédient (30) en tant que générateur de résistance affectant une entrée vers ledit moyen d'activation.

24. Utilisation, pour une capsule (30) destinée à une utilisation selon l'une quelconque des revendications 21 à 23, d'au moins l'un des constituants de type café, thé, chocolat, lait et soupe en tant qu'ingrédient.
